# EUROPEAN PATENT SPECIFICATION

(11) **EP 3 190 322 B1**
(45) Date of publication and mention of the grant of the patent: **21.11.2018**
(21) Application number: 17150494.7
(22) Date of filing: 06.01.2017
(51) Int. Cl.: F16K 17/04, F16K 47/08, F16K 1/44

(54) **FULL LIFT SAFETY VALVE**
VOLLHUB-SICHERHEITSVENTIL
SOUPAPE DE SÉCURITÉ À COURSE COMPLETE

(30) Priority: 07.01.2016 TR 201600228
(43) Date of publication of application: 12.07.2017
(73) Proprietor: Standart Gida Insaat Reklam Tem.Pompa Makine San.Tic.Ltd.Sti, Ankara (TR)
(72) Inventor: BEKTAS , SÜLÜK, ANKARA (TR)
(74) Representative: Yamankaradeniz, Kemal

(56) References cited:
- TR-U- 201 413 114
- US-A- 3 330 297
- US-A1- 2015 152 814

## Description

The present invention relates to a safety valve in which;
- The pressurised water and air from the pressurised vessel to be safeguarded are taken from the input body where they enter through a metal pipe and sent directly to the diaphragm reservoir,
- The pressurised steam, fluid and hot oil from the pressurised vessel to be safeguarded are taken from the pressure input body where they enter through a metal pipe and sent directly to the water reservoir and water equivalent to the pressure is transferred from the water reservoir to the diaphragm reservoir,
- The guide rod to which the diaphragm in the diaphragm reservoir is attached lowered equivalent to the pressure in excess of the limit,
- The guide rod contacts the clapper flange in the inlet body and lowers it for removing from the clapper contact site and a small amount of pressurised material is discharged to the external environment from the additional pressure unit in the pressure discharge body to perform "proportional lift" to discharge at the first stage the envisaged maximum flow rate to the external environment,
- As a result of the limit excess pressure increase due to the compression of the spring in the unit by the pressurised material filling into the additional pressure unit, the pressurised material entering from the gap that is formed as the clapper flange removes farther away from the clapper contact site is discharged into the external environment through the channels in the additional pressure unit to ensure "full lift" by discharging the excess pressure (instantaneous large masses) into the external environment.

### State of the Art

In the safety valves mounted on pressurised vessels operating with steam/air/hot oil/water, there exists a body that receives the pressure from the pressurised vessel it is attached to. Within the body there is a clapper, a guide rod to which the clapper is attached and an inner and outer springs surrounding the guide rod. On the guide rod, there is a piece which sets the pressure limit. When the pressure exceeds the specified limit, the pressure is transferred from the pressurised vessel directly into the body, expands the spring and the guide rod pushes the clapper upward. The excess pressure in an amount equal to the proportion discharged by the clapper is discharged from the channel on the body. When the excess pressure is discharged, the clapper moves its original closed position. The "proportional lift" that discharges the envisaged maximum flow rate to the external environment is provided.

A metal ring with an umbrella appearance, opening outward is mounted around the clapper to discharge the excess pressure (instantaneous big masses) from the pressurised vessels in a short time. As the discharge of some amount of pressure is continued in proportional lift, the excess pressure established presses on the ring and pushes the clapper further upwards and removes the clapper more from the body and a great mass is discharged to the external environment from the established gap. In the full lift system, first proportional lift is provide, and full lift is provided by the additional pressure.

In cases where the operation interval is sensitive, there may be a bit more or less discharge. For instance, if a 6 bar pressure limit has been set, there may a 5.9 bar or 6.1 bar outlet. In low tolerance pressure fluctuations, the clapper or the guide rod in not affected, the spring does not expand. Thus, if the pressure limits have not been exceeded for a long time, the system may not work. Since the inner and outer springs surrounding the guide rod frequently contact the pressurised material (steam, fluid, etc.), rusting may occur. The mechanical parts may not work, there may be rusting or jamming or the clapper may not open. When the excess pressure over the limit is high, if some mechanical parts of the valve do not operate, the safety valve does not sense the excess pressure and pressurised vessels may explode.

As a result of the upward movement of the clapper and the guide rod in the pressure inlet body, there may be pressure leakage from the pressure inlet body to the pressure discharge body, leading to energy loss.

In case the steam/hot oil/water, the pressure of which is utilised, is depleted/exhausted, the existing safety valves can not sense this and the metal surrounding the boiler heats up and melts.

The existing proportional lift and full lift safety valves do not have a switch that measures the level of heat in the pressurised vessel and that automatically stops the operation system in the pressurised vessel when the pressure exceeds the limit.

In order to minimise the above mentioned disadvantages, utility model document No. TR2014/13114 was acquired by the "Standart Gida İn 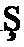 . Rek.Pom.Mak.San.Tic.Ltd. 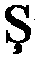 ti.". The utility model discloses a "proportional lift" safety valve discharging the envisaged maximum flow rate to the external environment, wherein
- pressurised water and air from the pressurised vessel to be safeguarded are taken from the pressure input body where they enter through a metal pipe and sent directly to the diaphragm reservoir, or the substances such as pressurised steam, fluid or hot oil, etc. from the pressurised vessel are taken from the pressure input body where they enter through a metal pipe and sent directly to the water reservoir and water equivalent to the pressure is transferred from the water reservoir to the diaphragm reservoir,
- The guide rod attached to the diaphragm reservoir removes by some distance the clapper flange it contacts from the contact site, creating a gap,
- The pressurised material is discharged to the external environment from the gap and the clapper flange returns to its initial position at the end of the discharge operation,
- The inner and outer springs surrounding the guide rod avoid contact with the pressurised material since the pressure is taken through a metal pipe from the pressure inlet body and transferred externally,
- The rusting, jamming and non-operation risks are minimised by sensing the tolerated pressure fluctuations under the limit in virtue a sensetive rubber diaphragm and providing motion in the guide rod and expansion in the springs (the guide rod dos not press on the clapper) and by sustaining the system in operation at all times,
- The level of heat is sensed by a probe/thermostat in case the heat level increases in pressurised vessels working with air/water or in case steam or hot oil depletes/consumed in devices working with steam/hot oil, and the operation of the pressurised vessel is stopped,
- In case the pressure limits set in the pressurised vessel are exceeded, the operation of the pressurised vessel is stopped and the pressure in excess of the limit is discharged in virtue of the hit of the switch contact ring connected to the guide rod to the stop switch connected to the safety command box.

### Object of the Invention

The object of the invention is to ensure the discharge of excess pressure (instantaneous large masses) from a pressurised vessel to the external environment in a short time by rendering "full lift" property to a "proportional lift" safety valve disclosed in the utility model document No. TR2014/13114.

The invention is characterised by:
1- a pressure inlet body and a pressure discharge body are mounted to each other,
2- comprising a pressure inlet channel where pressure enters, a pressure reservoir, a probe inlet channel where a probe is inserted and a pressure transfer collar connected to a metal pipe that will transfer the pressure, on the bottom of the pressure inlet body mounted to a pressurised vessel,
3- comprising a guide rod motion channel and a pressure discharge channel in the pressure discharge body,
4- comprising a clapper in the pressure inlet body and an additional pressure unit in the pressure discharge body,
5- the clapper and the additional pressure unit are mounted to each other,
6- comprising a pressure regulating cylinder, a pressure regulating nut, a inner spring, outer spring, a diaphragm reservoir sitting flange, a diaphragm reservoir and if necessary water reservoir on the pressure discharge body,
7- the guide rod comes out the diaphragm reservoir, goes through an inner and outer springs, a pressure setting cylinder and the additional pressure unit to contact a clapper flange,
8- the pressure in excess of the limit is transferred to the diaphragm reservoir or to the water reservoir by the metal pipe connected to a collar in the pressure inlet body (the pressurised material directly goes to the diaphragm or water reservoir and does not contact the inner and outer springs surrounding the guide rod),
9- in pressurised vessels working with steam and hot oil, hot liquid pressure, the pressure in excess of the limit is first sent to the water reservoir and then from the water reservoir water equivalent to this pressure is sent to the diaphragm reservoir so that the flammable and combustible materials from the pressure inlet reservoir do not damage the diaphragm,
10-the rubber diaphragm in the diaphragm reservoir senses all pressure fluctuations (in tolerated pressure fluctuations, the system is maintained in operation by a small amount of vertical motion of the guide rod and slight expansions in the springs),
11- the pressurised material (steam/air/hot oil/water/fluid, etc.) formed in the initial pressure increase is discharged from the additional pressure forming unit to the external environment (proportional opening) through the limited gap formed between the clapper contact site and the clapper flange as a result of the downward movement of the clapper flange contacting the end of the guide rod from the pressure inlet body equivalent to the amount of excess over the limit, further pressure is discharged into the external environment from the channels in the additional pressure forming unit (full lift) through the gap formed between the clapper contact site and the clapper flange as a result of the vertical downward motion of the clapper flange by the additional pressure formed by the expansion of the spring in the reservoir by the additional pressure accumulating in the reservoir, pushing upward of the lower cover to which the spring contacts, as the "additional pressure forming unit" discharges the limited amount of pressure, discharging further amount of pressure (instantaneous large masses) from the pressurised vessels in a short time,
12-the safety command box mounted on the safety valve comprises cable to which a stop switch and a heat measuring probe is connected,
13- when there is excess pressure over the limit, the guide rod and the switch contact ring connected to the guide rod move downward, and the switch contact ring hits the stop switch connected to the safety command box and the operation in the pressurised vessel stops,
14- when the heat over the limit that may form in the pressurised vessel due to depletion of water, hot oil, hot liquid enters the pressure inlet body, the probe coming out the safety command box with a cable senses the excess heat over the limit by inserting it into the pressure inlet reservoir and stops the operation of the vessel,
15-the water reservoir and/or the diaphragm reservoir is made metal or preferably plastic,
16-the pressure inlet body and the pressure discharge body are made of cast metal or preferably plastic,
17-the safety valve takes its energy from the pressurised vessel it is connected to and there is no need for another energy source.

The figures prepared to better understanding of the present invention are as follows:
Figure 1- Perspective view of the pressure inlet body,
Figure 2- Perspective view of the pressure discharge body,
Figure 3- Perspective view of the pressure inlet body and the pressure discharge body as mounted to each other,
Figure 4- Semi-open perspective view of the pressure inlet body and the pressure discharge body as mounted to each other,
Figure 5- Front perspective view of the demounted clapper and its accessories
Figure 6- Front perspective view of the mounted clapper and its accessories,
Figure 7- Below perspective view of the mounted clapper and its accessories,
Figure 8- Perspective view of the demounted additional pressure unit accessories,
Figure 9- Perspective view of the demounted pressure reservoir, reservoir fixing flange and clapper contact site,
Figure 10- Perspective view of the additional pressure unit having mounted pressure reservoir, reservoir fixing flange and clapper contact site,
Figure 11- Side perspective view of the half section of the additional pressure unit,
Figure 12- Front perspective view of the half section of the additional pressure unit,
Figure 13- Perspective view of the clapper and the additional pressure unit mounted to each other,
Figure 14- Half section perspective view of the clapper and the additional pressure unit mounted to each other,
Figure 15- Perspective view of the demounted pressure inlet body, pressure discharge body, guide rod, additional pressure unit accessories and the clapper accessories,
Figure 16- Perspective view of the demounted pressure inlet body, clapper, additional pressure unit and the pressure discharge body,
Figure 17- Perspective view of the mounted pressure inlet body, clapper, additional pressure unit and the pressure discharge body,
Figure 18- Semi-open perspective view of the additional pressure unit mounted in the pressure inlet body and the pressure discharge body without its springs and the guide rod,
Figure 19- Semi-open perspective view of the additional pressure unit mounted in the pressure inlet body and the pressure discharge body with the springs mounted and the guide rod inserted,
Figure 20- Perspective view of the clapper and the additional pressure unit when the pressure inlet body and the pressure discharge channel is half open,
Figure 21- Semi-open perspective view of the clapper, additional pressure unit and guide rod in the pressure inlet body and the pressure discharge body,
Figure 22- Perspective view of the demounted diaphragm rod, switch contact ring, guide rod, outer spring, inner spring, pressure setting nut and pressure setting cylinder,
Figure 23- Perspective view of the mounted diaphragm rod, guide rod, diaphragm reservoir sitting flange, switch contact ring, guide rod, outer spring, inner spring, pressure setting nut, pressure setting cylinder, fixing flange to discharge body and the connection pipes to the diaphragm reservoir,
Figure 24- Cross-sectional view of the mounted diaphragm rod, guide rod, diaphragm reservoir sitting flange, switch contact ring, guide rod, outer spring, inner spring, pressure setting nut, pressure setting cylinder, fixing flange to discharge body and the connection pipes to the diaphragm reservoir,
Figure 25- Perspective view of the diaphragm reservoir accessories in demounted position,
Figure 26- Perspective view of the diaphragm reservoir accessories in mounted position,
Figure 27- Perspective view of the diaphragm reservoir mounted to the diaphragm reservoir sitting flange,
Figure 28- Cross-sectional view of the diaphragm reservoir mounted to the diaphragm reservoir sitting flange,
Figure 29- Front perspective view of the safety command box and the perspective view of the stop switch in detail A,
Figure 30- Rear perspective view of the safety command box,
Figure 31- Front view of the test rod,
Figure 32- Perspective view of the safety valve with diaphragm reservoir,
Figure 33- Perspective view of the water reservoir,
Figure 34- Cross-sectional view of the water reservoir,
Figure 35- Perspective view of the diaphragm reservoir and the water reservoir mounted to each other,
Figure 36- Front perspective view of the safety valve with diaphragm reservoir and water reservoir,
Figure 37- Side perspective view of the safety valve with diaphragm reservoir and water reservoir,
Figure 38- Perspective view of the test rod as attached to the safety valve,
Figure 39- Perspective view of the pressure discharge body and the discharge pipe to the external environment in demounted position,
Figure 40- Cross-sectional view of non-limit pressure formation in the safety valve,
Figure 41- Cross-sectional detail view of limit pressure formation in the safety valve,
Figure 42- Cross-sectional view of proportional lift formation in the safety valve,
Figure 43- Cross-sectional detail view of proportional lift formation in the safety valve,
Figure 44- Semi-open perspective view of proportional lift formation in the safety valve,
Figure 45- Cross-sectional view of full lift formation in the safety valve,
Figure 46- Cross-sectional detail view of full lift formation in the safety valve.

Each of the parts illustrated in the figures prepared for a better understanding of the invention is given a reference. The explanations of the parts given references are as follows:
1- Pressure inlet body,
1.1- Fixing flange to the pressurised vessel,
1.1.1- Mounting hole of the fixing flange to the pressurised vessel,
1.1.2- Pressure inlet channel,
1.2- Pressure inlet reservoir,
1.2.1- Probe inlet channel,
1.2.2- Pressure transfer collar,
1.2.3- Pressure inlet port,
1.3- Fixing flange to the discharge body,
1.3.1- Mounting hole of the fixing flange to the discharge body,
1.3.2- O-ring channel of the fixing flange to the discharge body,
2- Pressure discharge body,
2.1- Fixing flange to the pressure inlet body,
2.1.1- Mounting hole of the fixing flange to the pressure inlet body,
2.2- Guide rod reservoir,
2.2.1- Guide rod movement channel,
2.3- Fixing flange to the spring assembly,
2.3.1- Mounting hole of the fixing flange to the spring assembly,
2.3.2- Connection rod manhole,
2.3.3- Inlet port to the connection flange guide rod,
2.4- Pressure discharge channel,
2.5- Mounting flange to the external environment discharge pipe,
2.5.1- Mounting hole of the mounting flange to the external environment discharge pipe,
2.6- Rod support fitting,
3- Nut,
4- Clapper,
4.1- Clapper frame,
4.1.1- Frame female teeth,
4.1.2- Clapper rod inlet hole,
4.2- Clapper rod,
4.3- Clapper rod spring,
4.4- Clapper flange,
4.4.1- Clapper flange guide rod contact surface,
5- Additional pressure unit,
5.1- Pressure reservoir,
5.1.1- Reservoir top cover that compresses the spring,
5.1.1.1- Guide rod manhole of the reservoir top cover that compresses the spring,
5.1.2- Reservoir spring,
5.1.3- Reservoir lower cover,
5.1.3.1- Guide rod manhole of the reservoir lower cover,
5.1.4- Additional pressure discharge channel,
5.1.5- Inlet hole of the unit pressure setting rod,
5.1.6- Male teeth fixing to the reservoir fixing flange,
5.2- Reservoir fixing flange,
5.2.1- Reservoir fixing flange o-ring channel,
5.2.2- Female teeth fixing to the pressure reservoir,
5.2.3- Male teeth fixing to the clapper frame,
5.2.4- Manhole of the guide rod of the reservoir fixing flange,
5.3- Clapper contact site,
5.3.1- Clapper contact site male teeth,
5.3.2- Clapper contact site guide rod manhole,
6- O-ring,
7- Guide rod,
8- Unit pressure setting rod,
9- Pressure setting cylinder,
10- Limit pressure setting nut,
10.1- Nut setting rod inlet hole,
10.2- Nut pressure setting rod,
11- Inner spring,
12- Outer spring,
13- Switch contact ring,
13.1- Contact ring guide rod manhole,
14- Sitting flange to the pressure discharge body,
14.1- Mounting hole of the pressure discharge body sitting flange,
15- Diaphragm reservoir sitting flange,
15.1- Manhole of the sitting flange guide rod,
15.2- Mounting hole of the diaphragm reservoir,
15.3- Manhole of the connection rod,
16- Connection rod between flanges,
17- Diaphragm reservoir,
17. 1-Diaphragm,
17.1.1- Diaphragm mounting hole,
17.1.2- Diaphragm centre-piece,
17.1.3- Rod manhole of the diaphragm centre-piece,
17.2- Diaphragm compression washer,
17.2.1- Diaphragm rod inlet hole on washer,
17.3-Diaphragm cap,
17.3.1- Diaphragm rod inlet hole on cap
17.4-Diaphragm rod,
17.5- Air/water inlet collar,
17.6- Connection holes to diaphragm reservoir sitting flange,
17.7- Diaphragm cover,
18- Safety command box,
18.1- Reset button
18.2- Switch control button,
18.3- Command box cable,
18.4- Probe,
18.5- Mounting hole to the connection rod of the command box,
19- Test rod,
19.1- Fork,
19.2- Handle,
20- Pressure transfer pipe,
21- Test rod sitting flange,
22- Water reservoir,
22.1- Pressure inlet collar,
22.2- Steam outlet collar,
22.3- Decreasing water inlet collar,
22.4- Water delivery collar,
22.5- Water cover,
23- Water transfer pipe,
24- Connection rod between reservoirs,
25- Discharge pipe to the external environment,
25.1- Mounting flange of the discharge pipe to external environment,
25.1.1- Mounting hole of the mounting flange for discharge to external environment,
26- Command board,
27-Stop switch,
27.1-Switch body,
27.2-Switch spring,
27.3-Switch arm,
27.4- Magnet.

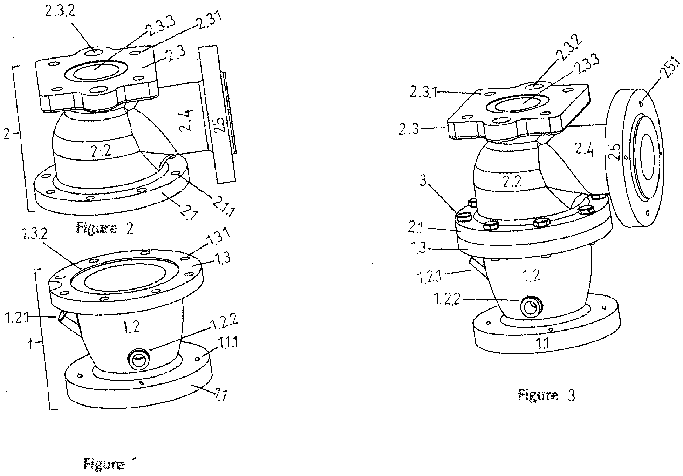

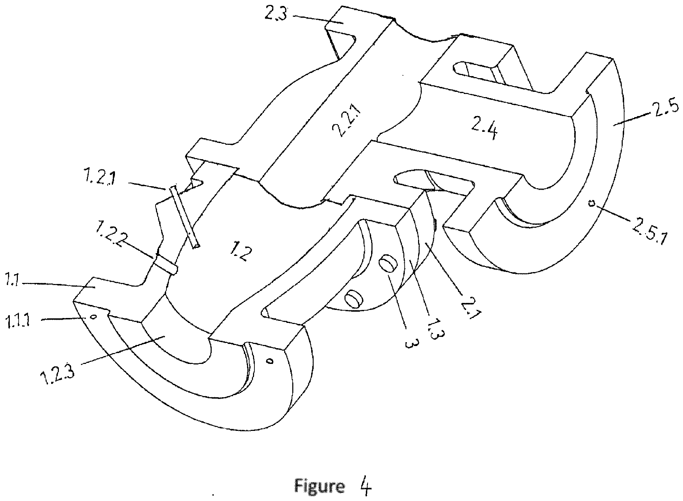

Figure 1 gives a perspective view of the pressure inlet body, Figure 2 gives a perspective view of the pressure discharge body, Figure 3 gives a perspective view of the pressure inlet and pressure discharge bodies mounted to each other, and Figure 4 gives a cross-sectional perspective view of the pressure inlet and pressure discharge bodies mounted to each other.

The pressure inlet body (1) comprises;
- a fixing flange to pressurised vessel (1.1) with mounting holes of the fixing flange to the pressurised vessel (1.1.1) on it,
- a pressure inlet reservoir (1.2) comprising probe inlet channel (1.2.1), pressure transfer collar (1.2.2) and pressure inlet port (1.2.3) on it,
- a fixing flange to the discharge body (1.3) with o-ring channel of the fixing flange to the discharge body (1.3.2) and mounting holes of the fixing flange to the discharge body (1.3.1) on it.

The pressure discharge body (2) comprises;
- a fixing flange to the pressure inlet body (2.1) with mounting holes of the fixing flange to the pressure inlet body (2.1.1) on it,
- a guide rod reservoir (2.2) with guide rod movement channel (2.2.1) on it,
- a fixing flange to the spring assembly (2.3) with mounting holes of the fixing flange to the spring assembly (2.3.1), connection rod manhole (2.3.2) and inlet port to the connection flange guide rod (2.3.3) on it,
- a pressure discharge channel (2.4), and
- a mounting flange to the external environment discharge pipe (2.5) with mounting holes of the mounting flange to the external environment discharge pipe (2.5.1) on it.

The fixing flange to the discharge body (1.3) is fixed to the fixing flange to the pressure inlet body (2.1) through the mounting holes of the fixing flange to the discharge body (1.3.1) and the mounting holes of the fixing flange to the pressure inlet body (2.1.1) by a nut (3).

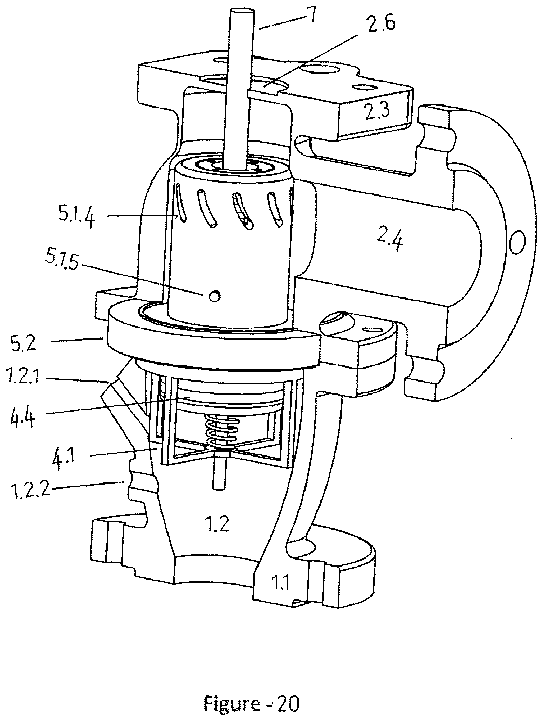

A rod support fitting (2.6) is mounted to the inlet port to the connection flange guide rod (2.3.3) in the guide rod movement channel (2.2.1) to bed a guide rod (7) (figure 20).

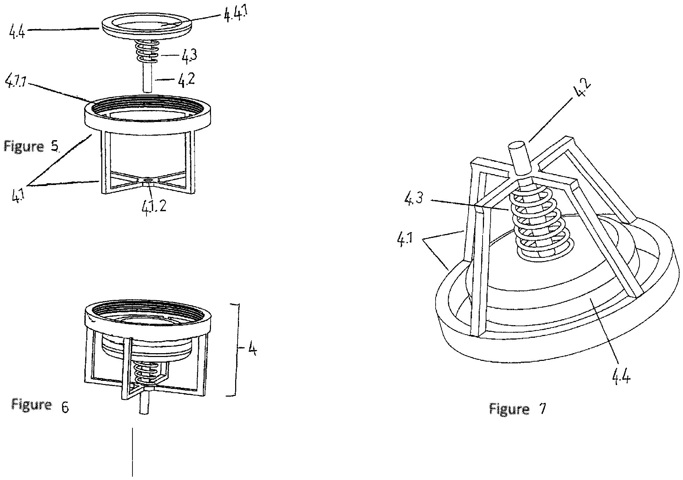

Figure 5 gives the front perspective view of the demounted clapper and clapper accessories, figure 6 gives the front perspective view of the mounted clapper and clapper accessories, and figure 7 gives the bottom perspective view of the mounted clapper and clapper accessories.

The clapper (4) comprises;
- a clapper frame (4.1) with frame female teeth (4.1.1) in it and a clapper rod inlet port (4.1.2) at its bottom,
- a clapper rod (4.2) with a clapper rod spring (4.3) on it,
- a clapper flange (4.4) with a clapper flange guide rod contact surface (4.4.1) to which this rod is connected.

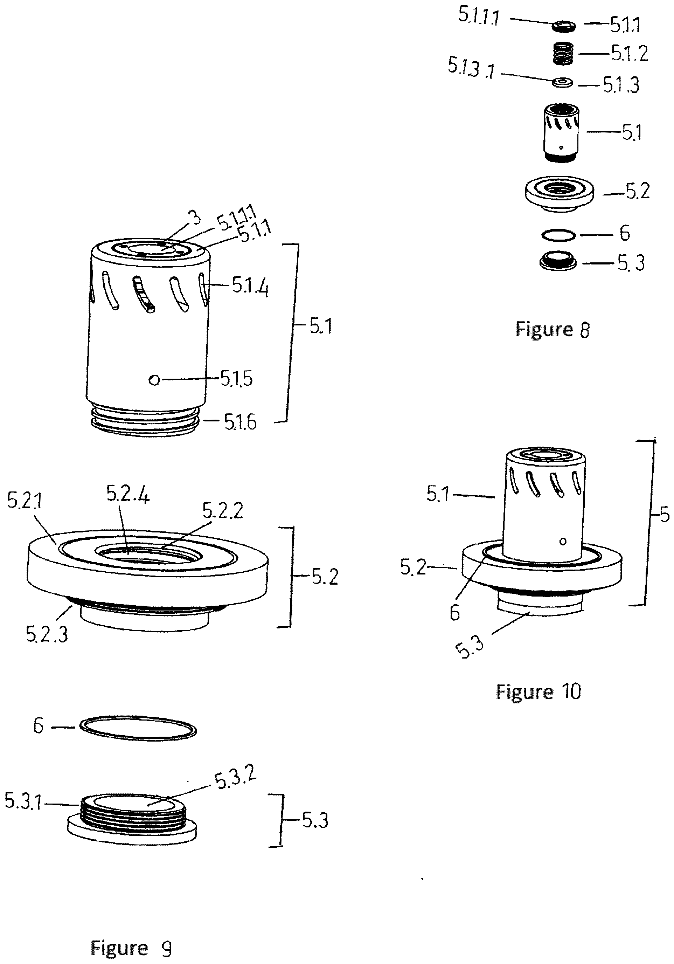

Figure 8 gives a perspective view of the demounted additional pressure unit accessories, figure 9 gives a perspective view of the demounted pressure reservoir, reservoir fixing flange and the clapper contact site and figure 10 gives a perspective view of the additional pressure unit formed by the mounted pressure reservoir, reservoir fixing flange and the clapper contact site.

An additional pressure unit (5) comprises a pressure reservoir (5.1), a reservoir fixing flange (5.2) and a clapper contact site (5.3).

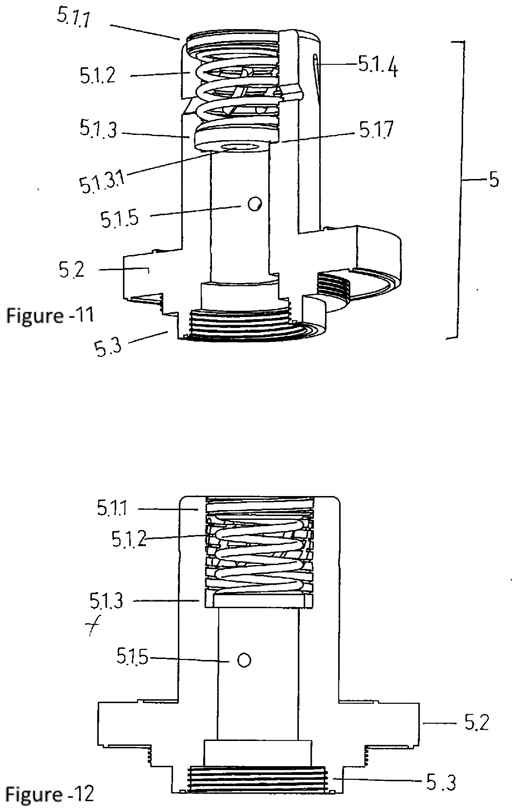

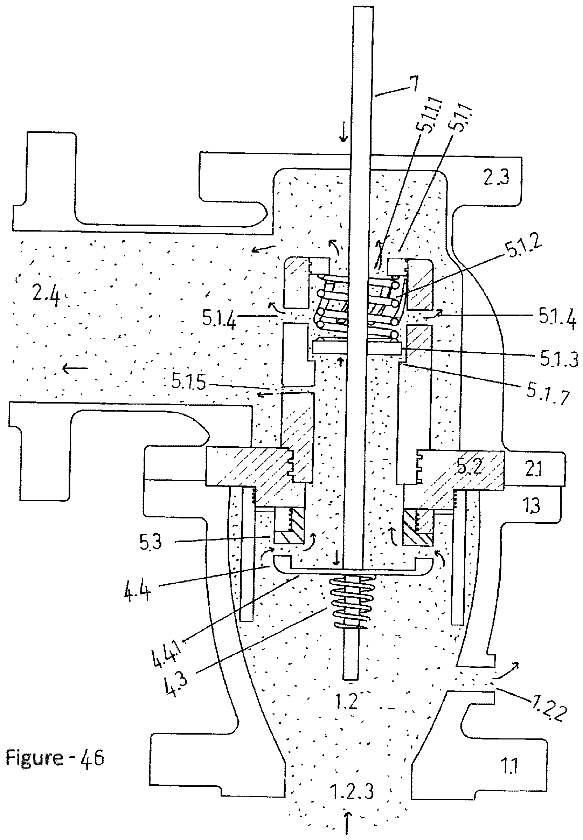

The pressure reservoir (5.1) comprises a reservoir top cover (5.1.1) that compresses the spring (5.1.2) with a guide rod manhole (5.1.1.1) of the reservoir top cover (5.1.1) on it, the reservoir spring (5.1.2) and a reservoir lower cover (5.1.3) with guide rod manhole (5.1.3.1) of the reservoir lower cover (5.1.3) on it (figure 11). The reservoir lower cover (5.1.3) sits on the reservoir lower cover sitting site (5.1.7) (figure 46). On the external part of the pressure reservoir (5.1) there are additional pressure discharge channels (5.1.4), inlet hole of the unit pressure setting rod (5.1.5) and at the bottom there are male teeth fixing to the reservoir fixing flange (5.1.6).

At the upper part of the reservoir fixing flange (5.2) there is a reservoir fixing flange o-ring channel (5.2.1), in the inner part there are female teeth fixing to the pressure reservoir (5.2.2) and at the bottom there are male teeth fixing to the clapper frame (5.2.3).

On the clapper contact site (5.3), there are clapper contact site male teeth (5.3.1) and clapper contact site guide rod manhole (5.3.2).

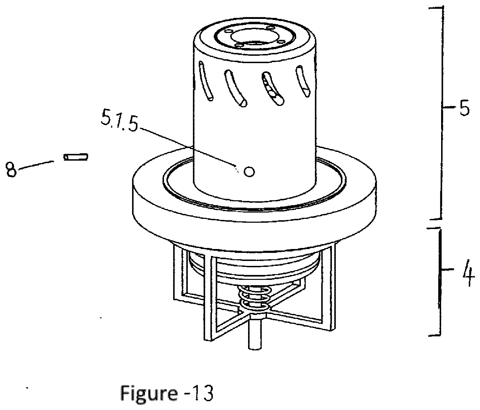

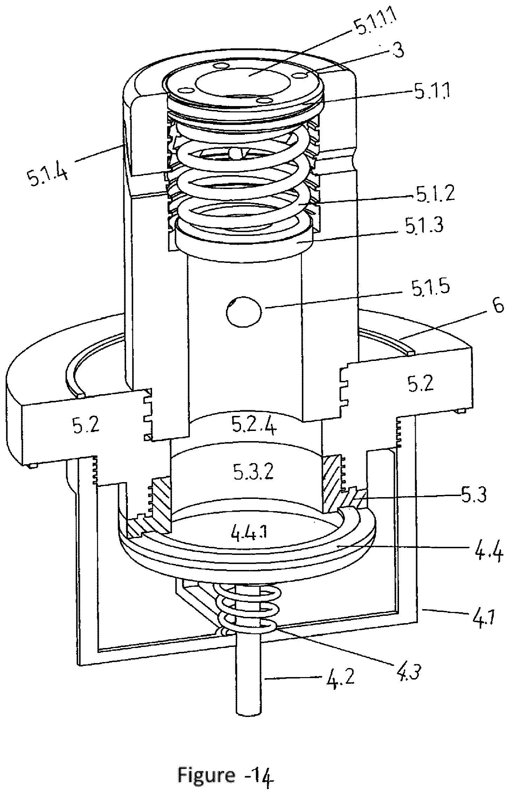

Figure 11 gives the side perspective view of the half section of the additional pressure unit, figure 12 gives the front perspective view of the half section of the additional pressure unit, figure 13 gives the perspective view of the clapper and the additional pressure unit mounted to each other and figure 14 gives the half section perspective view of the clapper and the additional pressure unit mounted to each other.

*Mounting the pieces of the additional pressure unit (5) to each other:* Into the pressure reservoir (5.1), the reservoir top cover that compresses the spring (5.1.1) is placed at the top, the reservoir lower cover (5.1.3) is placed at the bottom and between them the reservoir spring (5.1.2) is placed. An o-ring (6) is placed into the reservoir fixing flange o-ring channel (5.2.1) for impermeability. The pressure reservoir (5.1) is mounted by twisting the male teeth fixing to the reservoir fixing flange (5.1.6) and the female teeth fixing to the pressure reservoir (5.2.2) of the reservoir fixing flange (5.2). The clapper contact site (5.3) is mounted by twisting the clapper contact site male teeth (5.3.1) and the female teeth fixing to the pressure reservoir (5.2.2) (figure 9, figure 10).

Figure 13 gives the perspective view of the clapper and the additional pressure unit mounted to each other, and figure 14 gives the half section perspective view of the clapper and the additional pressure unit mounted to each other.

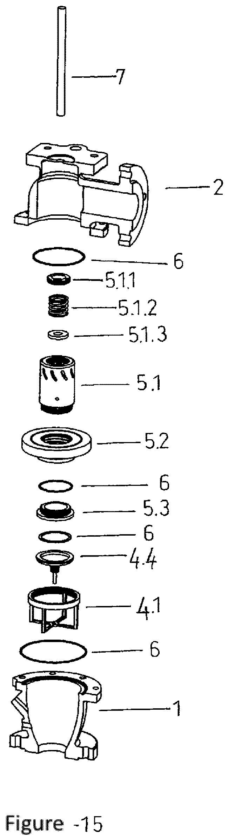

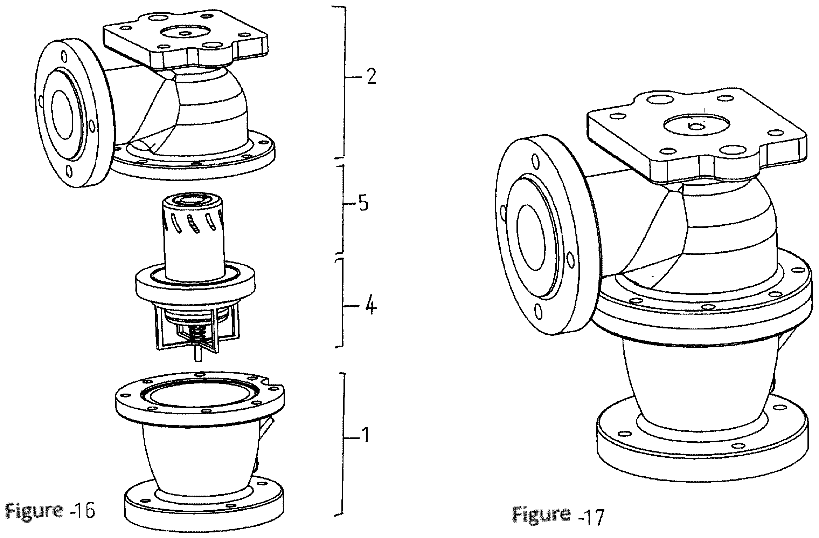

*Mounting the clapper (4) to the additional pressure unit (5):* Figure 15 gives the perspective view of the demounted pressure inlet body, pressure discharge body, guide rod, additional pressure unit accessories and the clapper accessories, figure 16 gives the perspective view of the demounted pressure inlet body, clapper, additional pressure unit and the pressure discharge body, and figure 17 gives the perspective view of the mounted pressure inlet body, clapper, additional pressure unit and the pressure discharge body. The reservoir fixing flange (5.2) is mounted by twisting the male teeth fixing to the clapper frame (5.2.3) to the frame female teeth (4.1.1) in the clapper (4) (figure 5, figure 9, figure 10, figure 13).

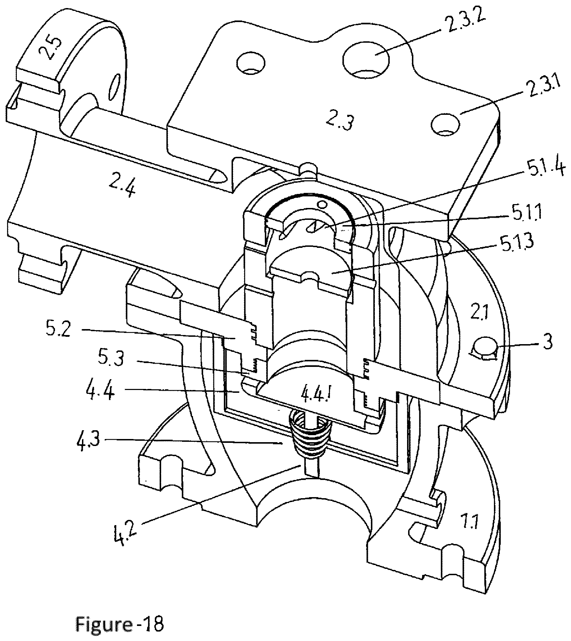

The guide rod (7) passes through the rod support fitting (2.6) mounted to the inlet port to the connection flange guide rod (2.3.3) in the fixing flange to the spring assembly (2.3) and respectively passes through the guide rod manhole (5.1.1.1) of the reservoir top cover (5.1.1) that compresses the spring (5.1.2), the guide rod manhole (5.1.3.1) of the reservoir lower cover (5.1.3), the female teeth fixing to the pressure reservoir (5.2.2) and the clapper contact site guide rod manhole (5.3.2) and contacts the clapper flange guide rod contact surface (4.4.1) at the bottom of the clapper flange (4.4) (figure 18, figure 19, figure 20).

Figure 11 gives the side perspective view of the half section of the additional pressure unit, and figure 12 gives the front perspective view of the half section of the additional pressure unit.

The positioning of the additional pressure unit (5) and the clapper (4) in the pressure inlet body (1) and the pressure discharge body (2) is as follows: Figure 16 gives the perspective view of the demounted pressure inlet body, clapper, additional pressure unit and the pressure discharge body and figure 17 gives the perspective view of the mounted pressure inlet body, clapper, additional pressure unit and the pressure discharge body. The rod support fitting (2.6) shown in figure 20 is placed to the inlet port to the connection flange guide rod (2.3.3) shown in figure 2. The guide rod (7) passes through the rod support fitting (2.6), the guide rod manhole (5.1.1.1) of the reservoir top cover (5.1.1) that compresses the spring (5.1.2), the reservoir spring (5.1.2) and the guide rod manhole (5.1.3.1) of the reservoir lower cover (5.1.3). After the guide rod (7) completes its pass through the pressure reservoir (5.1), it passes between the female teeth fixing to the pressure reservoir (5.2.2) inside the reservoir fixing flange (5.2) and the clapper contact site guide rod manhole (5.3.2), and contacts the clapper flange (4.4) (figure 8, figure 9, figure 10, figure 15).

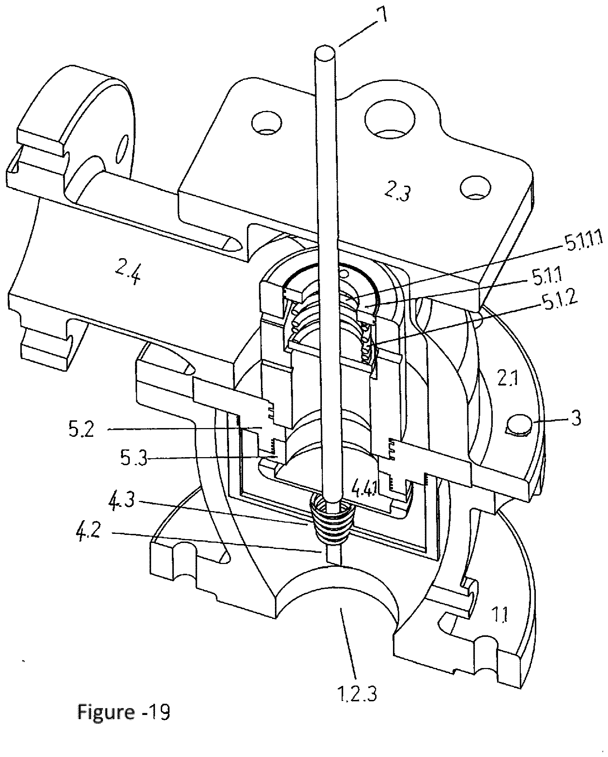

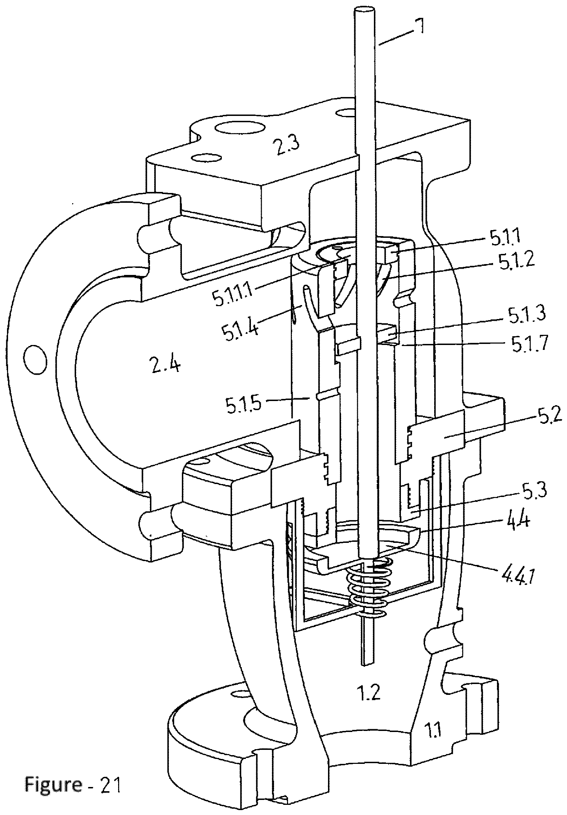

Figure 18 gives the semi-open perspective view of the additional pressure unit mounted in the pressure inlet body and the pressure discharge body without its springs and the guide rod, figure 19 gives the semi-open perspective view of the additional pressure unit mounted in the pressure inlet body and the pressure discharge body with the springs mounted and the guide rod inserted, figure 20 gives the perspective view of the clapper and the additional pressure unit when the pressure inlet body and the pressure discharge channel is half open, and figure 21 gives the semi-open perspective view of the clapper, additional pressure unit and guide rod in the pressure inlet body and the pressure discharge body.

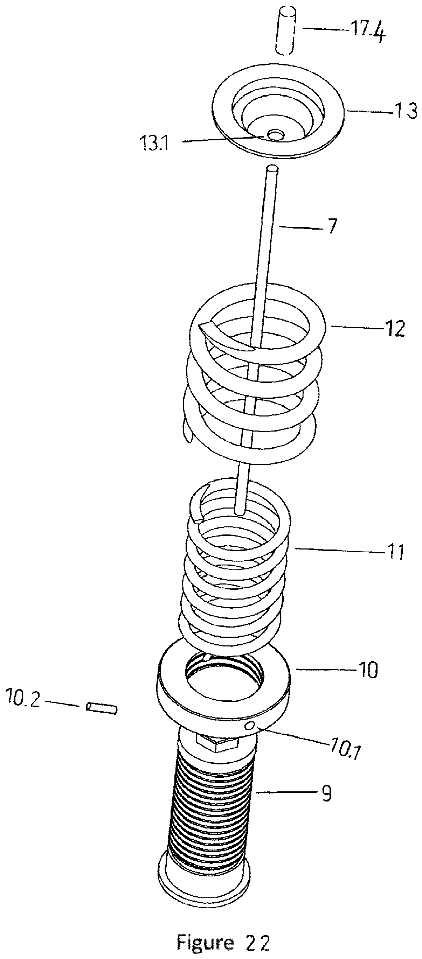

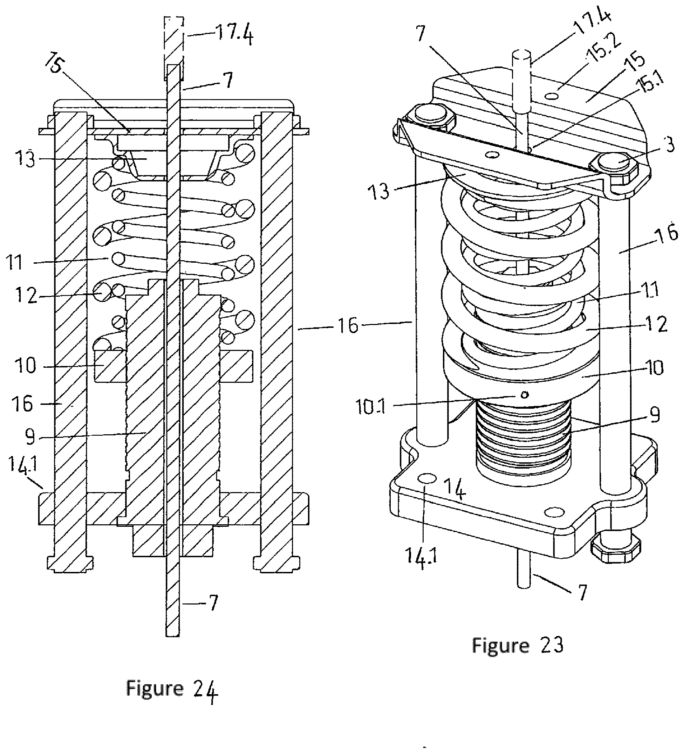

The positioning of the other accessorise on the pressure discharge body (2) are as follows: Figure 22 gives the perspective view of the demounted diaphragm rod, switch contact ring, guide rod, outer spring, inner spring, pressure setting nut and pressure setting cylinder, figure 23 gives the perspective view of the mounted diaphragm rod, guide rod, diaphragm reservoir sitting flange, switch contact ring, guide rod, outer spring, inner spring, pressure setting nut, pressure setting cylinder, fixing flange to discharge body and the connection pipes to the diaphragm reservoir, and figure 24 gives the cross-sectional view of the mounted diaphragm rod, guide rod, diaphragm reservoir sitting flange, switch contact ring, guide rod, outer spring, inner spring, pressure setting nut, pressure setting cylinder, fixing flange to discharge body and the connection pipes to the diaphragm reservoir.

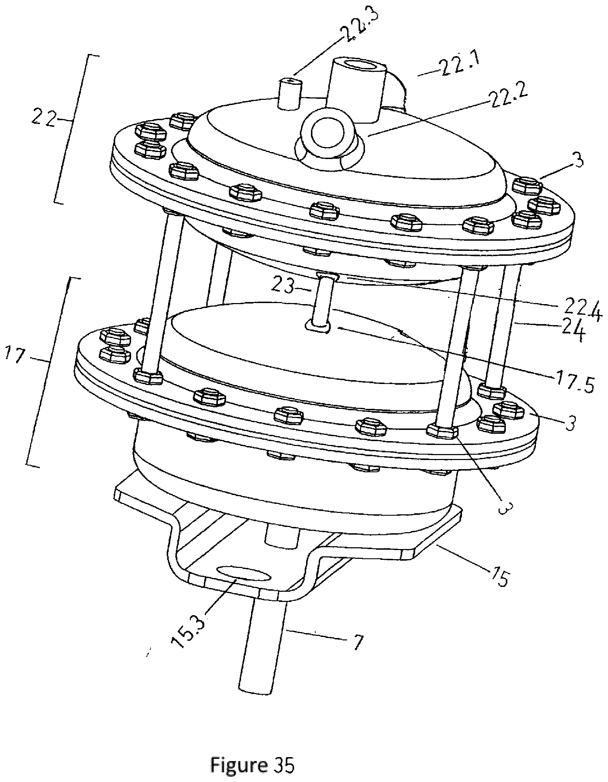

The sitting flange to the pressure discharge body (14) is fixed onto the mounting hole of the fixing flange to the spring assembly (2.3.1) on the fixing flange to the spring assembly (2.3) from the mounting hole of the pressure discharge body sitting flange (14.1) on it by a nut (3) (figure 23). Over the mounting hole of the pressure discharge body sitting flange (14), two vertical connection rods between flanges (16) rise and are fixed onto the diaphragm reservoir sitting flange (15) from the manhole of the connection rod (15.3) by a nut (3) (figure 23, figure 35). On the sitting flange to the pressure discharge body (14), there are respectively the pressure setting cylinder (9), the limit pressure setting nut (10), the inner spring (11), the outer spring (12) and the switch contact ring (13) on which there is the contact ring guide rod manhole (13.1).

On the diaphragm reservoir sitting flange (15), there are the manhole of the sitting flange guide rod (15.1), the mounting hole of the diaphragm reservoir (15.2) and the manholes of the connection rod (15.3) (figure 23, figure 35).

The mounting holes of the diaphragm reservoir (15.2) and the connection holes to diaphragm reservoir sitting flange (17.6) are fixed to each other by a nut (3) and the diaphragm reservoir (17) is fixed to the diaphragm reservoir sitting flange (15) (figure 23, figure 27, figure 28).

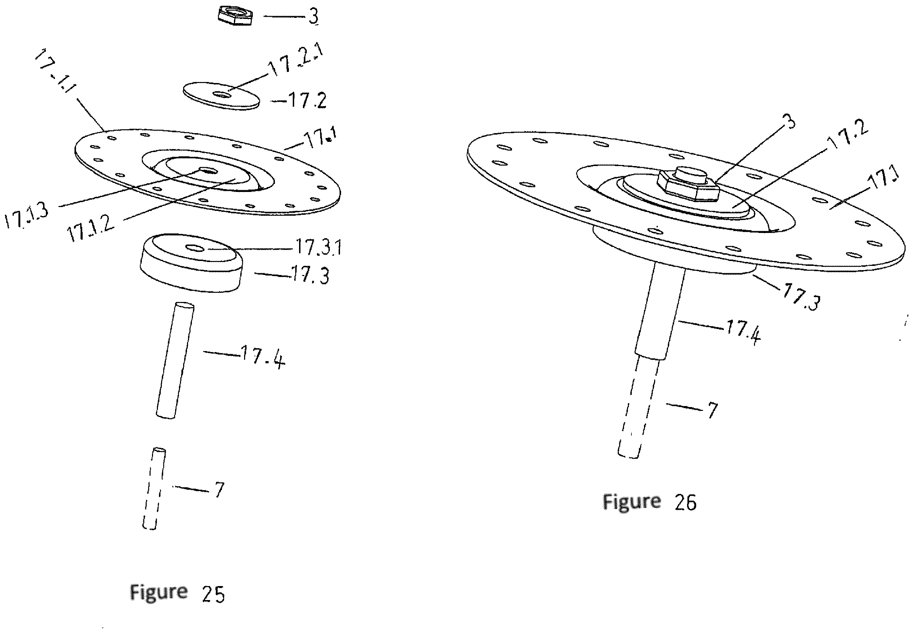

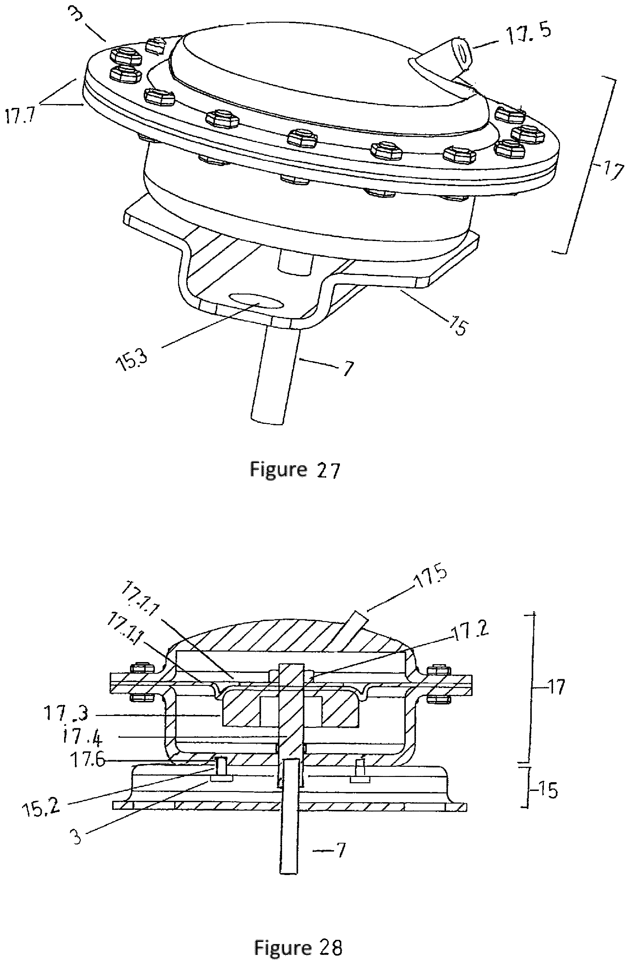

Figure 25 gives the perspective view of the diaphragm reservoir accessories in demounted position, figure 26 gives the perspective view of the diaphragm reservoir accessories in mounted position, figure 27 gives the perspective view of the diaphragm reservoir mounted to the diaphragm reservoir sitting flange and figure 28 gives the cross-sectional view of the diaphragm reservoir mounted to the diaphragm reservoir sitting flange.

The diaphragm reservoir (17) is formed by fixing two diaphragm covers (17.7) of two pieces with a symmetrical structure to each other by a nut (3) and placing the diaphragm accessories into the housing. In the central part of the diaphragm (17.1), around which there are diaphragm mounting holes (17.1.1), there is the diaphragm centre-piece (17.1.2) and at the centre of this there is the rod manhole of the diaphragm centre-piece (17.1.3).

On the diaphragm cap (17.3), there is the diaphragm rod inlet hole on cap (17.3.1). At the centre of the diaphragm compression washer (17.2), there is the diaphragm rod inlet hole (17.2.1). On the diaphragm cover (17.7) above, there is the air/water inlet collar (17.5) and the connection holes to diaphragm reservoir sitting flange (17.6).

The mounting of the accessories making the diaphragm reservoir (17) is as follows: The diaphragm rod (17.4) passes respectively through the diaphragm rod inlet hole on cap (17.3.1), rod manhole of the diaphragm centre-piece (17.1.3) and the diaphragm rod inlet hole on washer (17.2.1) and is fixed above with a nut (3). Below, the guide rod (7) is inserted into the diaphragm rod (17.4).

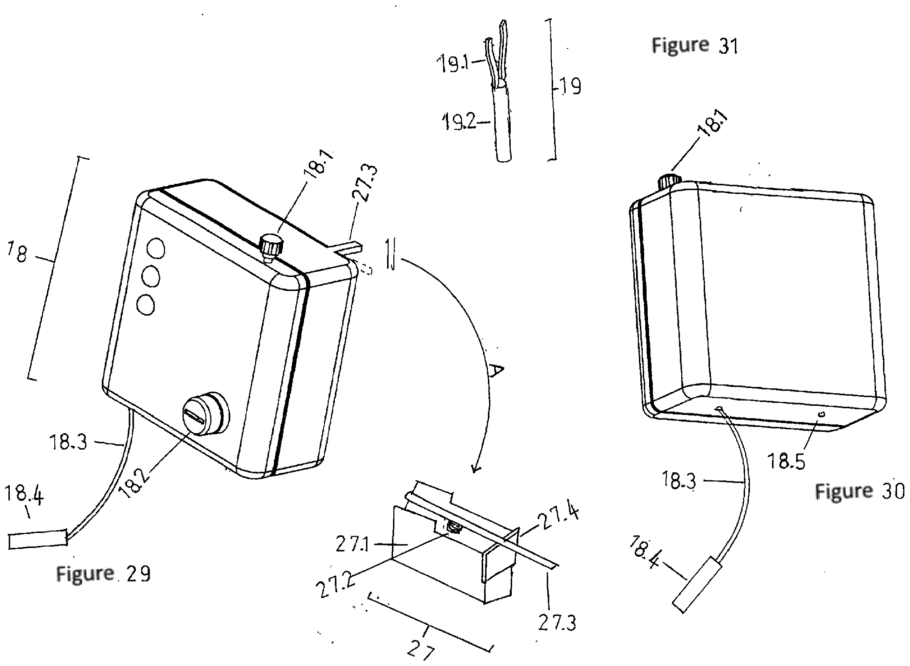

Figure 29 gives the front perspective view of the safety command box and the perspective view of the stop switch in detail A and figure 30 shows the rear perspective view of the safety command box. The safety command box (18) is fixed to the connection rod between flanges (16) from the mounting hole to the connection rod of the command box (18.5). On this box, there is the reset button (18.1), switch control button (18.2), command box cable (18.3) and there is the probe (18.4) at the end of the command box cable (18.3). Below the safety command box (18), there is the mounting hole to the connection rod of the command box (18.5)

The stop switch (27) is positioned on the safety command box (18). In the stop switch (27), the switch body (27.1) and the switch arm (27.3) on this body contacting the switch spring (27.2) sit on a magnet (27.4). the most important property of the stop switch (27) is that it comprises a magnet (27.4) that pulls the switch arm (27.3) to itself.

Figure 31 gives the front view of the test rod (19). The test rod (19) comprises a handle (19.2) and a fork (19.1) connected to this handle (19.2).

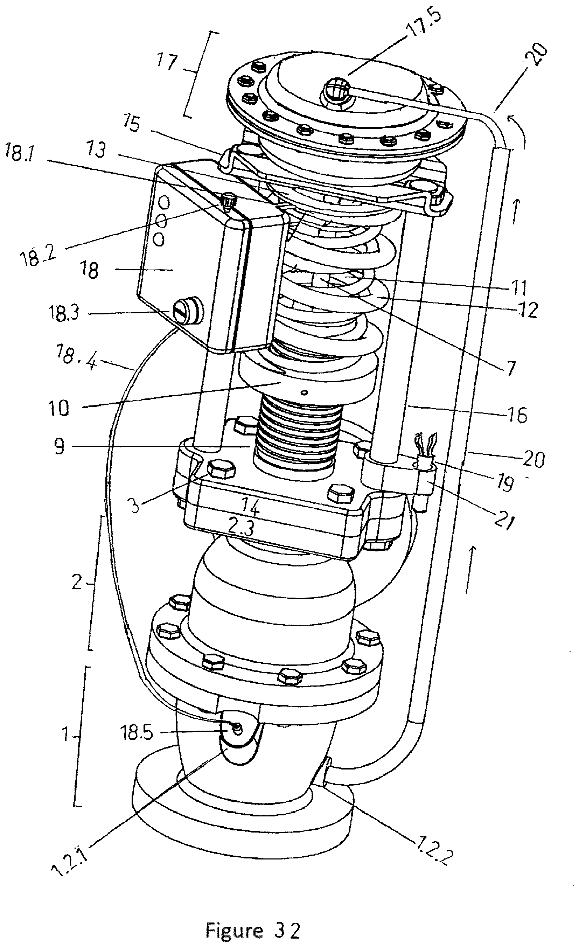

The parts making the safety valve with a diaphragm reservoir (17) are explained above. Figure 32 gives the perspective view of the safety valve with diaphragm reservoir. The pressurised material taken from the pressure inlet body (1) is transferred to the air/water inlet collar (17.5) above the diaphragm reservoir (17) from the pressure transfer collar (1.2.2) by a pressure transfer pipe (20). The test rod (19) is placed on the test rod sitting flange (21) mounted on the pressure discharge body flange (14).

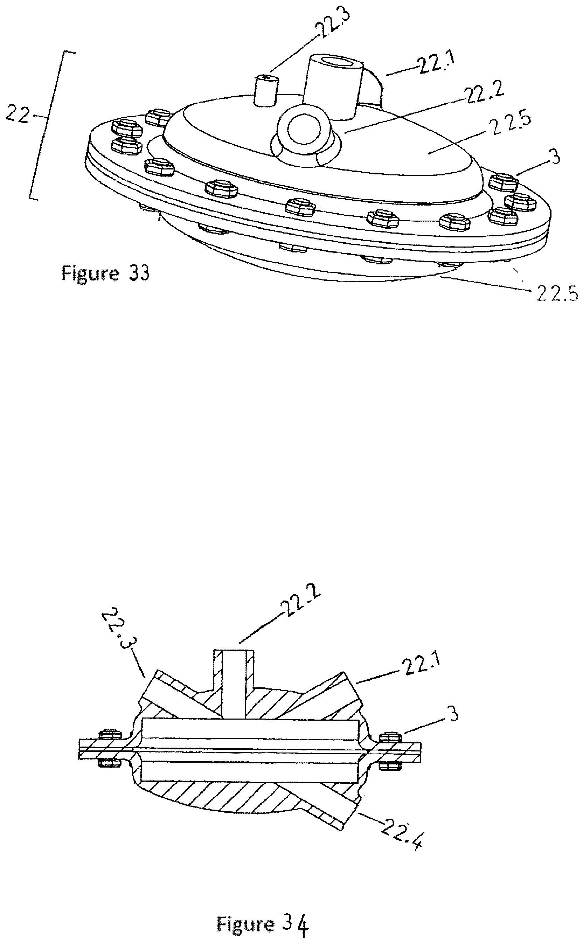

The diaphragm reservoir (17) is suitable for pressurised air and water. Since fluids such as steam, hot oil, etc. will deform the sensitive diaphragm (17.1), the water reservoir (22) is placed on the diaphragm reservoir (17). The fluids such as steam, hot oil, etc. are transferred to the water reservoir (22) before the pressure transfer pipe (20) and the pressure inlet collar (22.1). Water equivalent to the amount of pressure is delivered to the diaphragm reservoir (17) from the water reservoir (22) by the water transfer pipe (23) from the water delivery collar (22.4) through the air/water inlet collar (17.5) (figure 33, figure 34, figure 35, figure 36).

Figure 33 gives the perspective view of the water reservoir, figure 34 gives the cross-sectional view of the water reservoir and figure 35 gives the perspective view of the diaphragm reservoir and the water reservoir mounted to each other.

The water reservoir (22) is formed by fixing two water covers (22.5) to each other by nuts (3). In the upper water cover (22.5) there is the pressure inlet collar (22.1), the steam outlet collar (22.2), decreasing water inlet collar (22.3) and in the lower water cover there is the water delivery collar (22.4). Between the water reservoir (22) and the diaphragm reservoir (17), there is the water transfer pipe (23) (figure 30). There are connection rods between reservoirs (24) that connect the water reservoir (22) and the diaphragm reservoir (17) (figure 35).

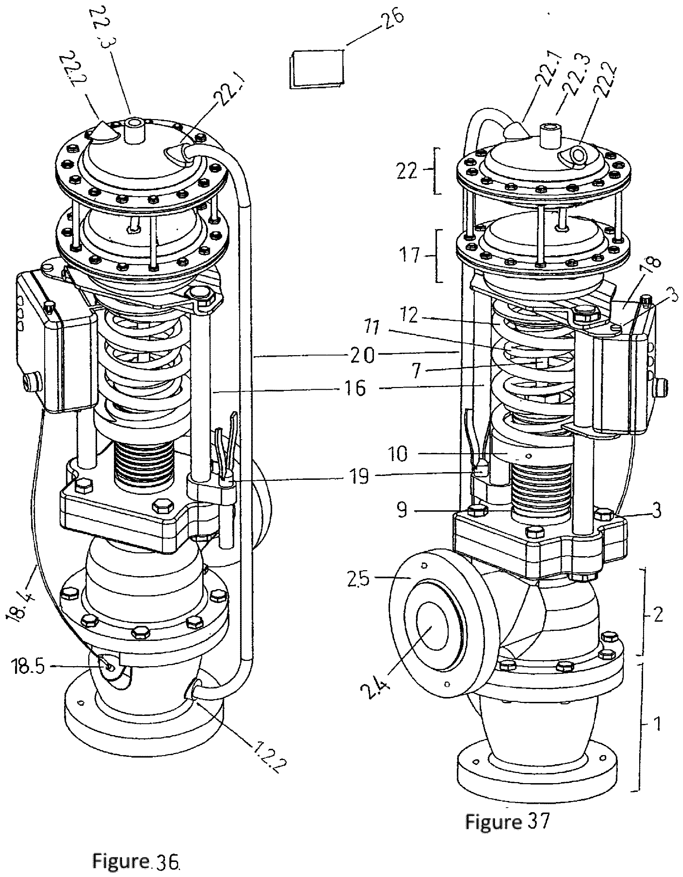

Figure 36 gives the front perspective view of the safety valve with diaphragm reservoir and water reservoir and figure 37 gives the side perspective view of the safety valve with diaphragm reservoir and water reservoir.

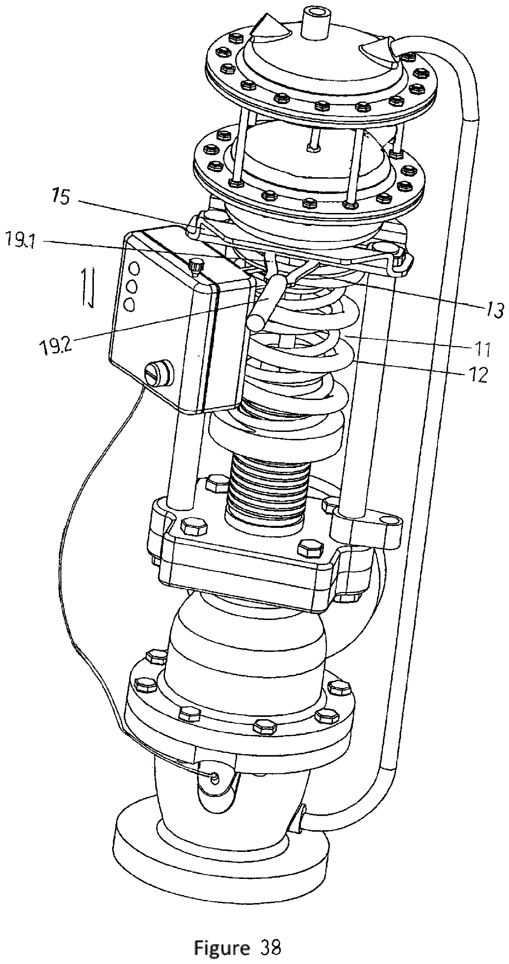

The system is checked (the expansion capacity of the inner spring (11) and the outer spring (12)) by placing the test rod (19) between the lower surface of the diaphragm reservoir sitting flange (15) and the switch contact ring (13). Figure 38 gives the perspective view of the test rod as attached to the safety valve.

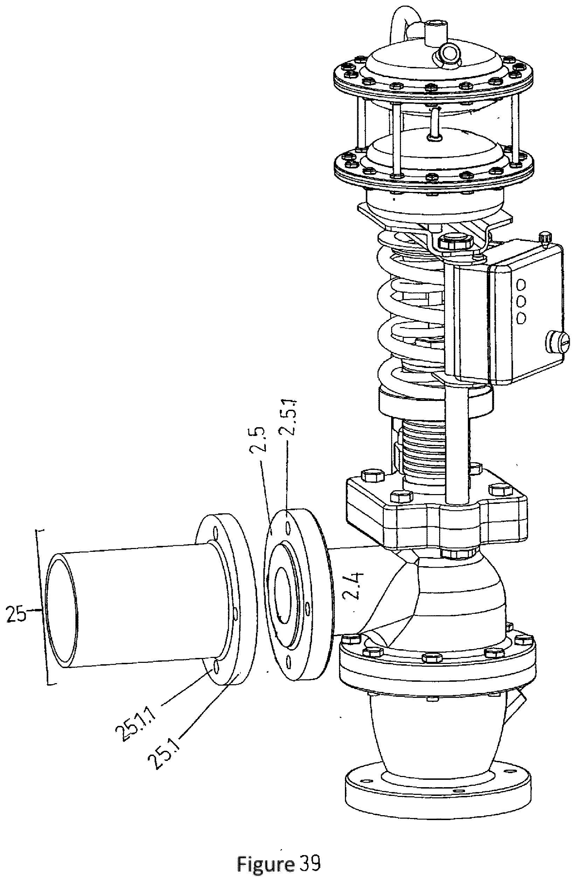

Figure 39 gives the perspective view of the pressure discharge body and the discharge pipe to the external environment in demounted position. On the discharge pipe to the external environment (25), there is the mounting flange of the discharge pipe to external environment (25.1) which has the mounting holes of the mounting flange for discharge to external environment (25.1.1) on it. The mounting holes of the mounting flange for discharge to external environment (25.1.1) are fixed to the mounting holes of the mounting flange to the external environment discharge pipe (2.5.1) by nut (3).

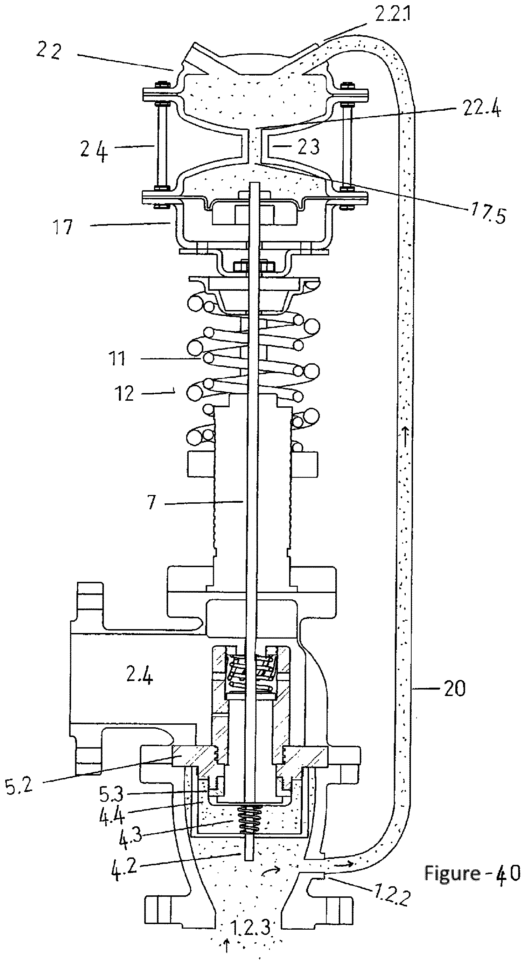

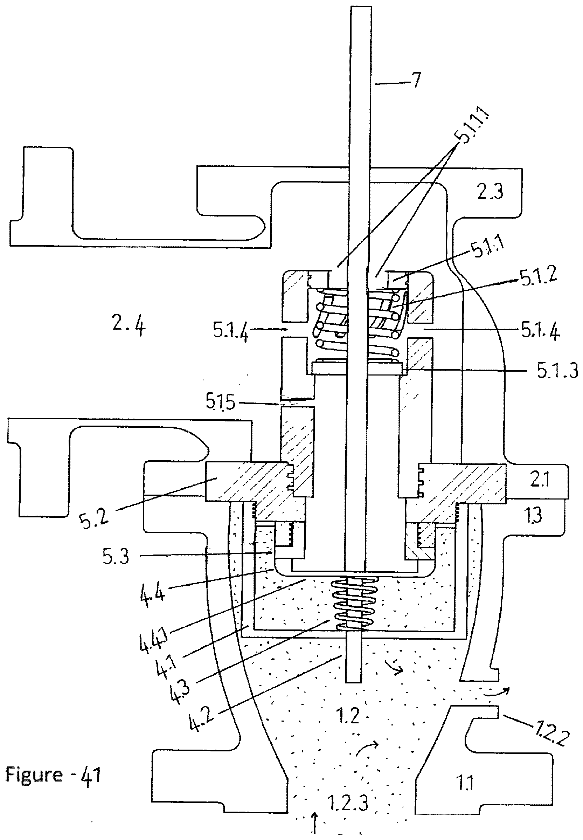

The operation system of the full lift safety valve disclosed in this description is as follows: Figure 40 gives the cross-sectional view of non-limit pressure formation in the safety valve and figure 41 gives the cross-sectional detail view of limit pressure formation in the safety valve

The limit pressure level exceeding the operation pressure in the pressurised level. (For instance, if the operation pressure is 5 bar, the limit is above 5 bar). The limit pressure setting is performed by inserting the nut pressure setting rod (10.2) through the nut setting rod inlet hole (10.1) on the limit pressure setting nut (10) (figure 22).

When the operation pressure reaches the set limit, the pressurised material in excess of the limit enters the pressure inlet reservoir (1.2) through the pressure inlet port (1.2.3) on the pressure inlet body (1). The pressurised material (showed with dots in Figure 40-46) progresses in the pressure transfer pipe (20) to enter the water reservoir (22) through the pressure inlet collar (22.1). Water equivalent to the pressure is delivered to the diaphragm reservoir (17) from the water delivery collar (22.4) shown in figure 34 by a water transfer pipe (23). It enters the diaphragm reservoir (17) through the air/water inlet collar (17.5) shown in figure 27 (figure 40, figure 41).

In the diaphragm reservoir (17) shown in figure 25 and figure 26, there is a diaphragm (17.1) made of sensitive rubber. The diaphragm centre-piece (17.1.2) at the centre of the diaphragm (17.1) oscillates up and down under the effect of the water or air coming into the reservoir. The diaphragm kepi (17.3) contacting the diaphragm centre-piece (17.1.2) and the diaphragm rod (17.4) passing through the diaphragm cap (17.3) move vertically. In pressure fluctuations within tolerances, the guide rod (7) entering the diaphragm rod (17.4) also fluctuates. The outer spring (12) and the inner spring (11) stretch slightly. However, the guide rod (7) does not press on the clapper flange guide rod contact surface (4.4.1) it contacts. In restricted oscillations the mechanical system is maintained in operation (figure 40, figure 41).

The amount of limit pressure that will ensure full lift in the additional pressure unit (5) is set by inserting the unit pressure setting rod (8) shown in figure 13 into the inlet hole of the unit pressure setting rod (5.1.5) and adjusting.

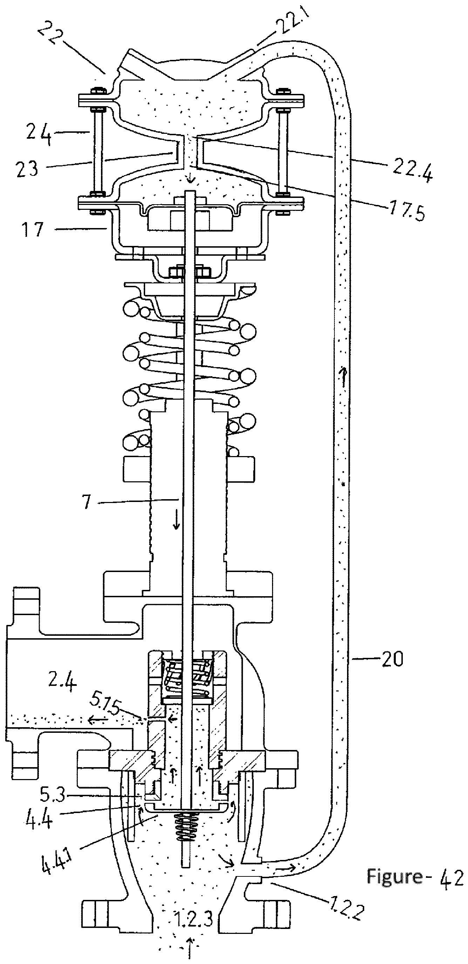

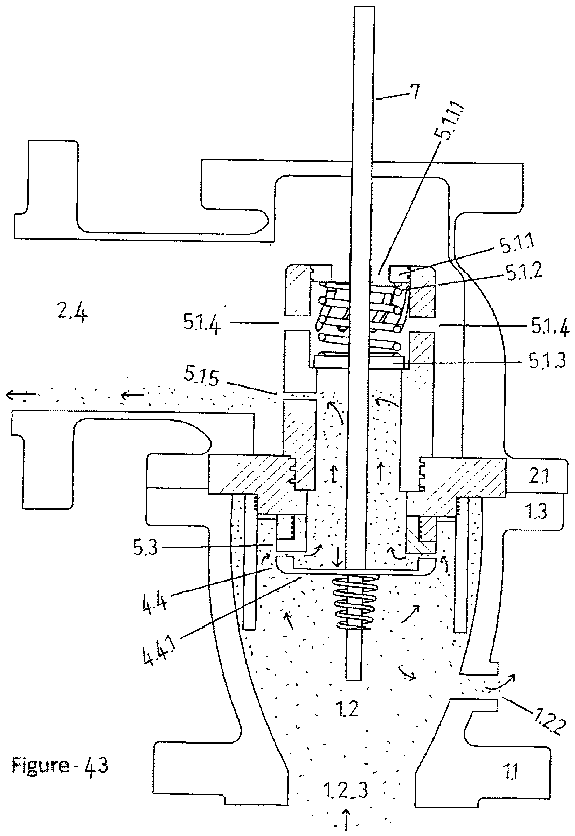

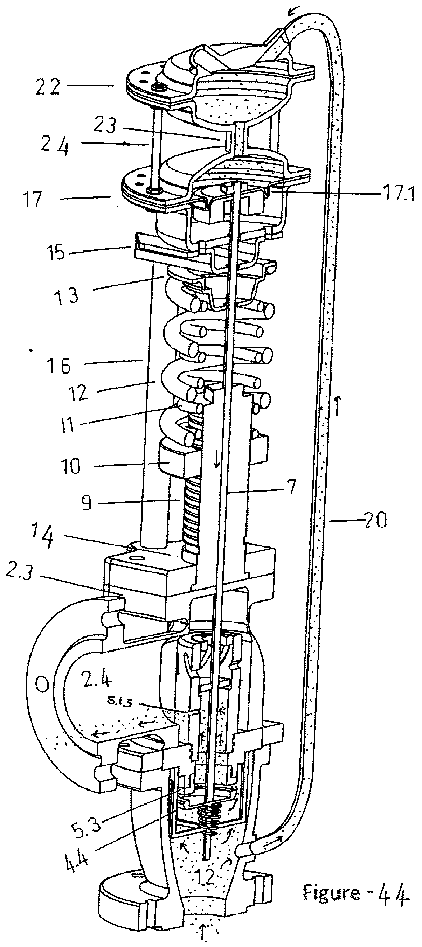

Figure 42 gives the cross-sectional view of proportional lift formation in the safety valve, figure 43 gives the cross-sectional detail view of proportional lift formation in the safety valve and figure 44 gives the semi-open perspective view of proportional lift formation in the safety valve.

The pressurised material coming to the pressure inlet reservoir (1.2) from the pressurised vessel moves upward through the pressure transfer collar (1.2.2) (the pressurised material is shown in dashed lines). The pressurised material moves in the pressure transfer pipe (20) and enters the water reservoir (22) through the pressure inlet collar (22.1). Water equivalent to the pressure comes to the water transfer pipe (23) through the water delivery collar (22.4) and enters the diaphragm reservoir (17) through the air/water inlet collar (17.5)

When the pressure exceeds the limit, the sensitive diaphragm centre-piece (17.1.2) is further lowered down and the diaphragm rod (17.4), thus the guide rod (7) connected to it goes down with increased pressure; thus, the guide rod (7) stretching the outer spring (12) and the inner spring (11), pushes down the clapper flange guide rod contact surface (4.4.1) it contacts and the clapper flange (4.4). A gap is formed between the clapper flange contact site (5.3) and the clapper flange (4.4) (figure 42, figure 43). The pressurised material shown with dashes line progresses in the pressure reservoir (5.1) through the gap formed and exits from the inlet hole of the unit pressure setting rod (5.1.5) shown in perspective in figure 9 and in cross-section in figure 43 and is discharged into the external environment through the pressure discharge channel (2.4). Restricted removal of the clapper flange (4.4) from the clapper flange contact site (5.3) is "proportional lift". With the proportional lift in the first stage, the pressurised material formed in the initial pressure increase is hence discharged into the external environment.

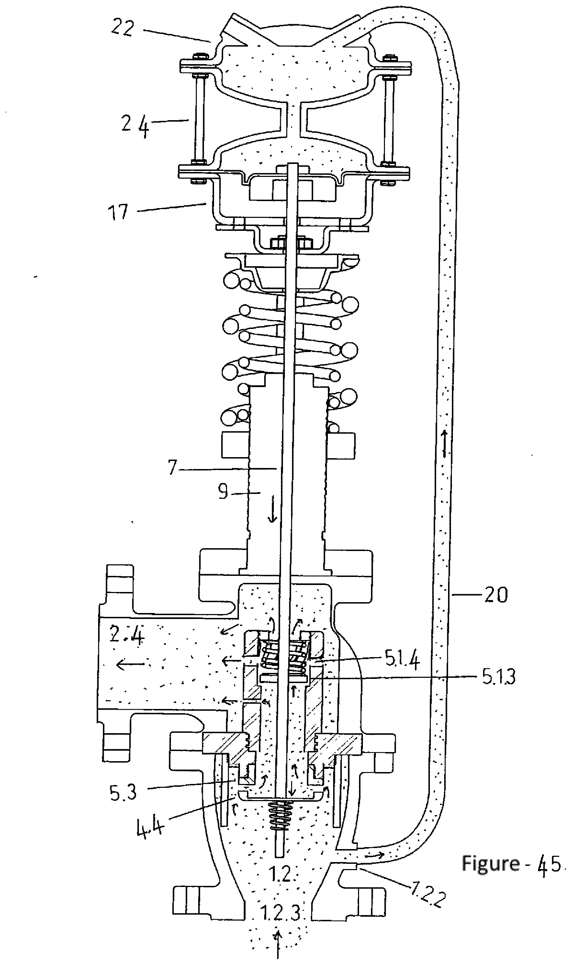

As a result of the restricted removal of the clapper flange (4.4) from the clapper contact site (5.3), some amount of pressurised material is discharged into the external environment through the inlet hole of the unit pressure setting rod (5.1.5) and at the same time the pressurised material fills into the pressure reservoir (5.1). As the reservoir lower cover (5.1.3) under the effect of pressure withdraws from the reservoir lower cover sitting site (5.1.7) shown in figure 46, it compresses the reservoir spring (5.1.2). Under the effect of the pressure of the compressed reservoir spring (5.1.2) and the impact pressure of the reservoir lower cover (5.1.3), the clapper flange (4.4) further goes downward and gets further away from the clapper flange sitting site (5.4). The pressurised materials spread intensively through the larger gap formed between the clapper flange (4.4) and the clapper contact site (5.3) into the pressure reservoir (5.1) and exits through the inlet hole of the unit pressure setting rod (5.1.5) and the remaining gap between the guide rod manhole (5.1.1.1) of the reservoir top cover (5.1.1) that compresses the spring (5.1.2) and the guide rod (7) and the additional pressure discharge channel (5.1.4), is delivered into the pressure discharge channel (2.4) and is discharged into the external environment. Hence, in the second stage, full lift is provided (figure 45, figure 46).

In the safety valve that does not need water reservoir (22), the pressure transfer pipe (20) directly enters the air/water inlet collar (17.5) of the diaphragm reservoir (17) and the operation flow proceeds as mentioned above (figure 32).

At the end of the command box cable (18.3) coming from the lower part of the safety command box (18), the heat measuring probe (18.4) in the pressure inlet reservoir (1.2) is inserted into the probe inlet channel (1.2.1). It measures the ambient heat in the pressure inlet reservoir (1.2). If the heat is above the limit, the safety command box (18) senses this heat change through the command board (26) of the pressurised vessel and stops the operation of the pressurised vessel (figure 29, figure 30, figure 32).

When excess pressure builds up over the limit, the guide rod (7) moves down and the switch contact ring (13) connected to the guide rod (7) also moves down (figure 32 figure 36, figure 37). The switch contact ring (13) hits the switch arm (27.3) of the stop switch (18.1) and changes its position. The switch arm (27.3) moves down a bit and gets under the influence of the magnet (27.4) and adheres to the magnet (27.4). This adherence causes the command board (26) to sense the situation and to stop the operation of the pressurised vessel. The operator manually pushes the reset button (18.2) and the stop switch (18.1) retains its initial position. The switch control button (18.2) provides the control of the stop switch (27). The reason why the resetting is manual is to ensure that the operator becomes aware of the excess pressure personally since in an electronic system the operator may not notice an error in the system.

Figure 38 gives the Perspective view of the test rod being mounted to the safety valve with diaphragm reservoir and water reservoir. To control the stretching capacity of the switch contact ring (13), the outer spring (12), and the inner spring (11), the test rod (19) is inserted between the diaphragm reservoir sitting flange (15) and the switch contact ring (13) from its fork (19.1) and is stretched. If there is rusting, malfunction, etc. in the system, there will be no stretching and the operator is warned (figure 38).

The command board (26) is mounted to a place at or near the safety valve (figure 36). It gets the events in the pressurised vessel and the safety valve to inform the work medium, the firm authority and the technical service in electronic medium. When there is risk, it gives visual and auditory signals.

The pressure inlet body (1) and the pressure discharge body (2) are manufactured from metal cast or preferably from plastics.

The diaphragm covers (17.7) of the diaphragm reservoir (17) and the covers (22.5) of the covers reservoir (22) are manufactured from metal cast or preferably from plastics.

## Claims

1. A full lift safety valve for a pressurised vessel to be safeguarded containing water and air, pressurised steam, fluid or hot oil, the full lift safety valve comprising a pressure inlet body (1), a pressure discharge body (2), a clapper (4), a guide rod (7), a pressure setting cylinder (9), an inner spring (11), an outer spring (12), a diaphragm reservoir (17), optionally a water reservoir (22) and a command board (26) wherein
• pressurised water and air from the pressurised vessel to be safeguarded are taken from the pressure input body where they enter through a metal pressure transfer pipe (20) and sent directly to the diaphragm reservoir (17), or
• pressurised steam, fluid or hot oil coming from the pressurised vessel are taken from the pressure input body (1) where they enter through a metal pressure transfer pipe (20) and sent directly to the water reservoir (22) and water equivalent to the pressure is transferred from the water reservoir (22) to the diaphragm reservoir (17),
wherein
• the guide rod (7) to which a diaphragm (17.1) in the diaphragm reservoir (17) is attached is lowered equivalently to the pressure in excess of the limit,
• the guide rod (7) contacts a clapper flange (4.4) in the pressure inlet body (1) and lowers and removes it from a clapper contact site (5.3) for some distance, and pressurised fluid is discharged into the external environment in the pressure discharge body (2),
• wherein the safety valve further comprises:
• a probe (18.4) adapted to sense high heat that may occur in the pressurised vessel to stop the operation of the pressurised vessel,
• a stop switch (27) adapted to stop the operation of the pressurised vessel when the pressure in pressurised vessels exceeds the set limit,
the safety valve being **characterised by** comprising an additional pressure unit (5), wherein when the guide rod (7) contacts the clapper flange (4.4) in the pressure inlet body (1), it lowers and removes it from the clapper contact site (5.3) for some distance, and a small amount of pressurised material is discharged into the external environment through an inlet hole of a unit pressure setting rod (5.1.5) in the additional pressure unit (5) in the pressure discharge body (2), thus providing a proportional lift that discharges the maximum flow rate envisaged at an initial stage, wherein the pressurised fluid filling into the additional pressure unit (5) withdraws a reservoir bottom cover (5.1.3) from a reservoir lower cover sitting site (5.1.7) to compress a reservoir spring (5.1.2) in additional pressure unit (5) and as a result of the increase of excess pressure over the limit accumulating in the additional pressure unit (5), the clapper flange (4.4) gets further away from the clapper contact site (5.3), and thus, the pressurised fluid entering from the increasing gap is discharged into the external environment through the additional pressure discharge channels (5.1.4) in the additional pressure unit (5), to provide a full lift that discharges larger amount of pressure into the external environment.

2. The full lift safety valve according to Claim 1, **characterised in that** the pressure inlet body (1) comprises;
• a fixing flange to the pressurised vessel (1.1) with mounting holes of the fixing flange to the pressurised vessel (1.1.1) on the bottom,
• a pressure inlet reservoir (1.2) with a pressure inlet port (1.2.3), a pressure transfer collar (1.2.2), a probe inlet channel (1.2.1) at the centre part,
• a fixing flange to the discharge body with an o-ring channel of the fixing flange to the discharge body (1.3.2) and mounting holes of the fixing flange to the discharge body (1.3.1) on it at the upper part,
and the pressure discharge body (2) comprises;
• a fixing flange to the pressure inlet body (2.1) with mounting holes of the fixing flange to the pressure inlet body (2.1.1) at the bottom,
• a guide rod reservoir (2.2) with guide rod movement channel (2.2.1) at the centre,
• a fixing flange to the spring assembly (2.3) with mounting holes of the fixing flange to the spring assembly (2.3.1), a connection rod manhole (2.3.2) and an inlet port to the connection flange guide rod (2.3.3) on it at the top,
• a pressure discharge channel (2.4) and a mounting flange to the external environment discharge pipe (2.5) with mounting holes of the mounting flange to the external environment discharge pipe (2.5.1) on it at the side.

3. The full lift safety valve according to Claim 1, **characterised in that** the pressure inlet reservoir (1.2) comprises the clapper contact site (5.3) to which the clapper flange (4.4) contacts.

4. The full lift safety valve according to Claim 1, **characterised in that** the clapper (4) in the pressure inlet reservoir (1.2) comprises a clapper rod inlet hole (4.1.2) at the bottom, a clapper frame (4.1) with frame teeth (4.1.1) at the top in the inner part, the clapper flange (4.4), a clapper rod (4.2) to which the clapper flange (4.4) is connected and the clapper rod spring (4.3) which surrounds the clapper rod (4.2).

5. The full lift safety valve according to Claim 1, **characterised in that** the additional pressure unit (5) comprises a pressure reservoir (5.1), a reservoir fixing flange (5.2) and the clapper contact site (5.3).

6. The full lift safety valve according to Claim 5, **characterised in that**;
• the pressure reservoir (5.1) comprises a reservoir top cover (5.1.1) that compresses the reservoir spring (5.1.2) with a guide rod manhole (5.1.1.1) of the reservoir top cover on it, the reservoir spring (5.1.2), the reservoir lower cover (5.1.3) with a guide rod manhole (5.1.3.1) of the reservoir lower cover (5.1.3) on it, the additional pressure discharge channel (5.1.4), an inlet hole of the unit pressure setting rod (5.1.5) and male teeth fixing to the reservoir fixing flange (5.1.6),
• the reservoir fixing flange (5.2) comprises a reservoir fixing flange o-ring channel (5.2.1) at the top, female teeth fixing to the pressure reservoir (5.2.2) at the centre and male teeth fixing to the clapper frame (5.2.3) at the bottom, and
• the clapper contact site (5.3) comprises clapper contact site male teeth (5.3.1) at the edges and clapper contact site guide rod manhole (5.3.2) at the centre.

7. The full lift safety valve according to Claim 6, **characterised by** comprising a unit pressure setting rod (8) entering the inlet hole of the unit pressure setting rod (5.1.5).

8. The full lift safety valve according to Claim 1, **characterised by** comprising a sitting flange to the pressure discharge body (14) which is connected to the fixing flange to the spring assembly (2.3) with nuts (3) and which has mounting holes of the pressure discharge body sitting flange (14.1) on it.

9. The full lift safety valve according to Claim 8, **characterised by** comprising connection rods between flanges (16) which connect the sitting flange to the pressure discharge body (14) and the diaphragm reservoir sitting flange (15) to each other.

10. The full lift safety valve according to Claim 1, **characterised by** comprising a test rod sitting flange (21) on the sitting flange to the pressure discharge body (14).

11. The full lift safety valve according to Claim 1, **characterised by** comprising a pressure setting cylinder (9) between the sitting flange to the pressure discharge body (14) and the diaphragm reservoir sitting flange (15), a pressure setting nut (10) on which there is a nut setting rod inlet hole (10.1), an inner spring (11), an outer spring (12) and a switch contact ring (13) which comprises a contact ring guide rod manhole (13.1) in it.

12. The full lift safety valve according to Claim 11, **characterised by** comprising a manhole of the sitting flange guide rod (15.1), a mounting hole of the diaphragm reservoir (15.2) and a manhole of the connection rod (15.3) on the diaphragm reservoir sitting flange (15).

13. The full lift safety valve according to Claim 11, **characterised in that** the diaphragm reservoir (17) mounted to the diaphragm reservoir sitting flange (15) comprises a diaphragm (17.1) between two symmetrical diaphragm covers (17.7) connected to each other with nuts (3), a diaphragm compression washer (17.2), a diaphragm cap (17.3), a diaphragm rod (17.4), an air/water inlet collar (17.5), connection holes to diaphragm reservoir sitting flange (17.6).

14. The full lift safety valve according to Claim 13, **characterised by** comprising a diaphragm rod inlet hole on washer (17.2.1) on the diaphragm compression washer (17.2), a diaphragm mounting hole (17.1.1) on the diaphragm (17.1), a diaphragm centre-piece (17.1.2), a rod manhole of the diaphragm centre-piece (17.1.3), a diaphragm rod inlet hole on cap (17.3.1) on the diaphragm cap (17.3).

15. The full lift safety valve according to Claim 1, **characterised in that** a safety command box (18) is connected to the pressure transfer pipe (20) and comprises a reset button (18.1), a switch control button (18.2), a command box cable (18.3), the probe (18.4) and a mounting hole to the connection rod of the command box (18.5).

16. The full lift safety valve according to Claim 1, **characterised by** comprising a test rod (19) which comprises a test rod sitting flange (21) that is mounted and that comprises a handle (19.2) and a fork (19.1).

17. The full lift safety valve according to Claim 1, **characterised in that** the pressure transfer pipe (20) is between a pressure transfer collar (1.2.2) and an air/water inlet collar (17.5).

18. The full lift safety valve according to Claim 1, **characterised in that** the water reservoir (22) is formed by two symmetrical water covers (22.5) fixed to each other by nuts (3), and that the upper water cover (22.5) comprises a pressure inlet collar (22.1), a steam outlet collar (22.2), a decreasing water inlet collar (22.3) and a water delivery collar (22.4) on the lower water cover (22.5).

19. The full lift safety valve according to Claim 1, **characterised by** comprising a water transfer pipe (23) and connection rods between reservoirs (24) between the diaphragm reservoir (17) and the water reservoir (22).

20. The full lift safety valve according to Claim 15, J 2. **characterised in that** the command board (26) is connected to the safety command box (18) and is mounted to a place outside the safety valve.

## Patentansprüche

1. Vollhubsicherheitsventil für einen zu sichernden Druckbehälter, der Wasser und Luft, unter Druck stehenden Dampf, Fluid oder heißes Öl enthält, wobei das Vollhubsicherheitsventil einen Druckeinlasskörper (1), einen Druckabgabekörper (2), einen Klöppel (4), eine Führungsstange (7), einen Druckstellzylinder (9), eine Innenfeder (11), eine Außenfeder (12), einen Membranbehälter (17), optional einen Wasserbehälter (22) und eine Befehlsplatine (26) umfasst, wobei
• unter Druck stehendes Wasser und Luft aus dem zu sichernden Druckbehälter aus dem Druckeinlasskörper genommen werden, wo sie durch ein Metalldrucktransferrohr (20) eintreten, und direkt zum Membranbehälter (17) gesendet werden, oder
• unter Druck stehender Dampf, Fluid oder heißes Öl aus dem Druckbehälter aus dem Druckeinlasskörper (1) genommen werden, wo sie durch ein Metalldrucktransferrohr (20) eintreten, und direkt zum Wasserbehälter (22) gesendet werden, und dem Druck äquivalentes Wasser vom Wasserbehälter (22) zum Membranbehälter (17) übertragen wird,
wobei
• die Führungsstange (7), an der eine Membran (17.1) im Membranbehälter (17) befestigt ist, wird äquivalent zum Druck oberhalb der Grenze gesenkt,
• die Führungsstange (7) einen Klöppelflansch (4.4) im Druckeinlasskörper (1) kontaktiert und ihn von einer Klöppelkontaktstelle (5.3) um einen gewissen Abstand senkt und entfernt, und unter Druck stehendes Fluid in die externe Umgebung im Druckabgabekörper (2) abgegeben wird,
• wobei das Sicherheitsventil ferner umfasst:
• eine Sonde (18.4), die angepasst ist, um starke Hitze zu erfassen, die im Druckbehälter auftreten kann, um den Betrieb des Druckbehälters zu stoppen,
• einen Stoppschalter (27), der angepasst ist, um den Betrieb des Druckbehälters zu stoppen, wenn der Druck im Druckbehälter die eingestellte Grenze übersteigt,
wobei das Sicherheitsventil **dadurch gekennzeichnet ist, dass** es eine zusätzliche Druckeinheit (5) umfasst, wobei, wenn die Führungsstange (7) den Klöppelflansch (4.4) im Druckeinlasskörper (1) kontaktiert, sie ihn von der Klöppelkontaktstelle (5.3) um einen gewissen Abstand senkt und entfernt, und eine geringe Menge unter Druck stehenden Materials durch ein Einlassloch einer Einheitsdruckstellstange (5.1.5) in der zusätzlichen Druckeinheit (5) im Druckabgabekörper (2) in die externe Umgebung abgegeben wird, wodurch ein proportionaler Hub bereitgestellt wird, der die in einem Anfangszustand angestrebte maximale Strömungsrate abgibt, wobei das sich in die zusätzliche Druckeinheit (5) füllende unter Druck stehende Fluid eine Behälterbodenabdeckung (5.1.3) von einer Sitzstelle (5.1.7) der unteren Abdeckung des Behälters wegzieht, um eine Behälterfeder (5.1.2) in der zusätzlichen Druckeinheit (5) zu komprimieren und durch den Anstieg des die Grenze übersteigenden Drucks, der sich in der zusätzlichen Druckeinheit (5) sammelt, der Klöppelflansch (4.4) weiter von der Klöppelkontaktstelle (5.3) entfernt wird, und somit das vom zunehmenden Spalt eintretende, unter Druck stehende Fluid durch zusätzliche Druckabgabekanäle (5.1.4) in der zusätzlichen Druckeinheit (5) in die externe Umgebung abgegeben wird, um einen Vollhub bereitzustellen, der eine größere Menge Druck in die externe Umgebung abgibt.

2. Vollhubsicherheitsventil nach Anspruch 1, **dadurch gekennzeichnet, dass** der Druckeinlasskörper (1) Folgendes umfasst:
• einen Befestigungsflansch zum Druckbehälter (1.1) mit Montagelöchern des Befestigungsflanschs zum Druckbehälter (1.1.1) am Boden,
• einen Druckeinlassbehälter (1.2) mit einer Druckeinlassöffnung (1.2.3), einen Drucktransferkragen (1.2.2), einen Sondeneinlasskanal (1.2.1) am Mittelteil,
• einen Befestigungsflansch zum Abgabekörper mit einem O-Ring-Kanal des Befestigungsflanschs zum Abgabekörper (1.3.2) und Montagelöcher des Befestigungsflanschs zum Abgabekörper (1.3.1) daran an dem oberen Teil,
und wobei der Druckabgabekörper (2) Folgendes umfasst:
• einen Befestigungsflansch zum Druckeinlasskörper (2.1) mit Montagelöchern des Befestigungsflanschs zum Druckeinlasskörper (2.1.1) am Boden,
• einen Führungsstangenbehälter (2.2) mit einem Führungsstangenbewegungskanal (2.2.1) in der Mitte,
• einen Befestigungsflansch zur Federgruppe (2.3) mit Montagelöchern des Befestigungsflanschs zur Federgruppe (2.3.1), ein Verbindungsstangenmannloch (2.3.2) und eine Einlassöffnung zur Verbindungsflanschführungsstange (2.3.3) daran an der Oberseite,
• einen Druckabgabekanal (2.4) und einen Montageflansch zum Abgaberohr zur externen Umgebung (2.5) mit Montagelöchern des Montageflanschs zum Abgaberohr zur externen Umgebung (2.5.1) daran an der Seite.

3. Vollhubsicherheitsventil nach Anspruch 1, **dadurch gekennzeichnet, dass** der Druckeinlassbehälter (1.2) die Klöppelkontaktstelle (5.3) umfasst, die der Klöppelflansch (4.4) kontaktiert.

4. Vollhubsicherheitsventil nach Anspruch 1, **dadurch gekennzeichnet, dass** der Klöppel (4) im Druckeinlassbehälter (1.2) ein Klöppelstangeneinlassloch (4.1.2) am Boden, einen Klöppelrahmen (4.1) mit Rahmenzähnen (4.1.1) an der Oberseite des Innenteils, den Klöppelflansch (4.4), eine Klöppelstange (4.2), mit der der Klöppelflansch (4.4) verbunden ist, und die Klöppelstangenfeder (4.3), die die Klöppelstange (4.2) umgibt, umfasst.

5. Vollhubsicherheitsventil nach Anspruch 1, **dadurch gekennzeichnet, dass** die zusätzliche Druckeinheit (5) einen Druckbehälter (5.1), einen Behälterbefestigungsflansch (5.2) und die Klöppelkontaktstelle (5.3) umfasst.

6. Vollhubsicherheitsventil nach Anspruch 5, **dadurch gekennzeichnet, dass**:
• der Druckbehälter (5.1) eine obere Abdeckung des Behälters (5.1.1) umfasst, die die Behälterfeder (5.1.2) mit einem Führungsstangenmannloch (5.1.1.1) der oberen Abdeckung des Behälters daran, die Behälterfeder (5.1.2), die untere Abdeckung des Behälters (5.1.3) mit einem Führungsstangenmannloch (5.1.3.1) der unteren Abdeckung des Behälters (5.1.3) daran, den zusätzlichen Druckabgabekanal (5.1.4), ein Einlassloch der Einheitsdruckstellstange (5.1.5) und die Steckerzähne, die zum Behälterbefestigungsflansch (5.1.6) befestigen, komprimiert,
• der Behälterbefestigungsflansch (5.2) einen Behälterbefestigungsflansch-O-Ring-Kanal (5.2.1) an der Oberseite, Buchsenzähne, die zum Druckbehälter (5.2.2) in der Mitte befestigen, und Steckerzähne, die zum Klöppelrahmen (5.2.3) an der Unterseite befestigen, umfasst, und
• die Klöppelkontaktstelle (5.3) Steckerzähne der Klöppelkontaktstelle (5.3.1) an den Kanten und ein Führungsstangenmannloch der Klöppelkontaktstelle (5.3.2) in der Mitte umfasst.

7. Vollhubsicherheitsventil nach Anspruch 6, **dadurch gekennzeichnet, dass** es eine Einheitsdruckstellstange (8) umfasst, die in das Einlassloch der Einheitsdruckstellstange (5.1.5) eintritt.

8. Vollhubsicherheitsventil nach Anspruch 1, **dadurch gekennzeichnet, dass** es einen Stellflansch zum Druckabgabekörper (14) umfasst, der mit dem Befestigungsflansch zur Federgruppe (2.3) mit Muttern (3) verbunden ist und der Montagelöcher des Druckabgabekörpersitzflanschs (14.1) daran hat.

9. Vollhubsicherheitsventil nach Anspruch 8, **dadurch gekennzeichnet, dass** es Verbindungsstangen zwischen Flanschen (16) umfasst, die den Sitzflansch zum Druckabgabekörper (14) und den Membranbehältersitzflansch (15) miteinander verbinden.

10. Vollhubsicherheitsventil nach Anspruch 1, **dadurch gekennzeichnet, dass** es einen Teststangensitzflansch (21) am Sitzflansch zum Druckabgabekörper (14) umfasst.

11. Vollhubsicherheitsventil nach Anspruch 1, **dadurch gekennzeichnet, dass** es einen Druckstellzylinder (9) zwischen dem Sitzflansch zum Druckabgabekörper (14) und dem Membranbehältersitzflansch (15), eine Druckstellmutter (10), an der sich ein Stellmutternstangeneinlassloch (10.1) befindet, eine Innenfeder (11), eine Außenfeder (12) und einen Schalterkontaktring (13) umfasst, die ein Kontaktringführungsstangenmannloch (13.1) darin umfasst.

12. Vollhubsicherheitsventil nach Anspruch 11, **dadurch gekennzeichnet, dass** es ein Mannloch der Sitzflanschführungstange (15.1), ein Montageloch des Membranbehälters (15.2) und ein Mannloch der Verbindungsstange (15.3) am Membranbehältersitzflansch (15) umfasst.

13. Vollhubsicherheitsventil nach Anspruch 11, **dadurch gekennzeichnet, dass** der am Membranbehältersitzflansch (15) montierte Membranbehälter (17) eine Membran (17.1) zwischen zwei symmetrischen Membranabdeckungen (17.7), die mit Muttern (3) miteinander verbunden sind, eine Membrankompressionsunterlegscheibe (17.2), eine Membrankappe (17.3), eine Membranstange (17.4), einen Luft/Wasser-Einlasskragen (17.5), Verbindungslöcher zum Membranbehältersitzflansch (17.6) umfasst.

14. Vollhubsicherheitsventil nach Anspruch 13, **dadurch gekennzeichnet, dass** es ein Membranstangeneinlassloch an der Unterlegscheibe (17.2.1) an der Membrankompressionsunterlegscheibe (17.2), ein Membranmontageloch (17.1.1) an der Membran (17.1), ein Membranmittelstück (17.1.2), ein Stangenmannloch des Membranmittelstücks (17.1.3), ein Membranstangeneinlassloch an der Kappe (17.3.1) der Membrankappe (17.3) umfasst.

15. Vollhubsicherheitsventil nach Anspruch 1, **dadurch gekennzeichnet, dass** eine Sicherheitsbefehlbox (18) mit dem Drucktransferrohr (20) verbunden ist und eine Resettaste (18.1), eine Schaltersteuertaste (18.2), ein Befehlboxkabel (18.3), die Sonde (18.4) und ein Montageloch zur Verbindungsstange der Befehlbox (18.5) umfasst.

16. Vollhubsicherheitsventil nach Anspruch 1, **dadurch gekennzeichnet, dass** es eine Teststange (19) umfasst, die einen Teststangensicherheitsflansch (21) umfasst, der montiert ist und einen Griff (19.2) und eine Gabel (19.1) umfasst.

17. Vollhubsicherheitsventil nach Anspruch 1, **dadurch gekennzeichnet, dass** das Drucktransferrohr (20) zwischen einem Drucktransferkragen (1.2.2) und einem Luft/Wasser-Einlasskragen (17.5) ist.

18. Vollhubsicherheitsventil nach Anspruch 1, **dadurch gekennzeichnet, dass** der Wasserbehälter (22) durch zwei symmetrische Wasserabdeckungen (22.5), die durch Muttern (3) aneinander befestigt sind, gebildet wird, und dass die obere Wasserabdeckung (22.5) einen Druckeinlasskragen (22.1), einen Dampfauslasskragen (22.2), einen abnehmenden Wassereinlasskragen (22.3) und einen Wasserlieferkragen (22.4) auf der unteren Wasserabdeckung (22.5) umfasst.

19. Vollhubsicherheitsventil nach Anspruch 1, **dadurch gekennzeichnet, dass** es ein Wassertransferrohr (23) und Verbindungsstangen zwischen Behältern (24) zwischen dem Membranbehälter (17) und dem Wasserbehälter (22) umfasst.

20. Vollhubsicherheitsventil nach Anspruch 15, **dadurch gekennzeichnet, dass** die Befehlsplatine (26) mit der Sicherheitsbefehlsbox (18) verbunden und an einem Ort außerhalb des Sicherheitsventils montiert ist.

## Revendications

1. Soupape de sécurité à course complète pour un récipient sous pression à protéger contenant de l'eau et de l'air, de la vapeur sous pression, un fluide ou une huile chaude, la soupape de sécurité à course complète comprenant un corps d'entrée de pression (1), un corps de décharge de pression (2), un clapet (4), une tige de guidage (7), un cylindre de réglage de pression (9), un ressort interne (11), un ressort externe (12), un réservoir de diaphragme (17), éventuellement un réservoir d'eau (22) et un tableau de commande (26)
• ladite eau et ledit air sous pression provenant du récipient sous pression à protéger étant pris du corps d'entrée de pression où ils rentrent par l'intermédiaire d'un tuyau de transfert de pression métallique (20) et envoyés directement au réservoir de diaphragme (17), ou
• une vapeur sous pression, un fluide ou une huile chaude venant du récipient sous pression étant pris d'un corps d'entrée de pression (1) où ils entrent par un tuyau de transfert de pression métallique (20) et envoyés directement au réservoir d'eau (22) et ladite eau équivalente à la pression d'eau étant transférée du réservoir d'eau (22) au réservoir de diaphragme (17),
• ladite tige de guidage (7) à laquelle est attaché un diaphragme (17.1) dans le réservoir de diaphragme (17) étant abaissée de manière équivalente à la pression excédant la limite,
• ladite tige de guidage (7) entrant en contact avec une bride de clapet (4.4) dans le corps d'entrée de pression (1) et l'abaissant et la retirant du site de contact de clapet (5.3) sur une certaine distance, et ledit fluide sous pression étant déchargé dans l'environnement externe dans le corps de décharge de pression (2),
• ladite soupape de sécurité comprenant :
• une sonde (18.4) adaptée à la détection de chaleur élevée qui pourrait se produire dans le récipient sous pression pour arrêter le fonctionnement du récipient sous pression,
• un commutateur d'arrêt (27) adapté pour arrêter le fonctionnement du récipient sous pression lorsque la pression dans les récipients sous pression dépasse la limite définie,
ladite soupape de sécurité étant **caractérisée** en comprenant une unité de pression supplémentaire (5), lorsque la tige de guidage (7) entre en contact avec la bride de clapet (4.4) dans le corps d'entrée de pression (1), celle-ci l'abaisse et la retire du site de contact de clapet (5.3) sur une certaine distance et un petite quantité de matériau sous pression est déchargée dans l'environnement extérieur à travers un orifice d'entrée d'une tige de réglage de pression d'unité (5.1.5) dans l'unité de pression supplémentaire (5) dans le corps de décharge de pression (2), fournissant ainsi une course proportionnelle qui décharge le débit maximum envisagé à un stade initial, ledit fluide sous pression remplissant l'unité de pression supplémentaire (5) retirant un couvercle inférieur de réservoir (5.1.3) d'un site d'assise (5.1.7) de couvercle inférieur de réservoir pour comprimer un ressort (5.1.2) de réservoir dans l'unité de pression supplémentaire (5) et à la suite de l'augmentation de la surpression au dessus de la limite s'accumulant dans l'unité de pression supplémentaire (5), ladite bride de clapet (4.4) venant à s'éloigner du site de contact de clapet (5.3), et ainsi, ledit fluide sous pression entrant par l'écart augmentant étant déchargé dans l'environnement extérieur par les canaux de décharge de pression supplémentaires (5.1.4) dans l'unité de pression supplémentaire (5), pour fournir une course complète qui décharge une plus grande quantité de pression dans l'environnement extérieur.

2. Soupape de sécurité à course complète selon la revendication 1, **caractérisée en ce que** le corps d'entrée de pression (1) comprend ;
• une bride de fixation au récipient sous pression (1.1) avec des trous de montage de la bride de fixation au récipient sous pression (1.1.1) sur la partie inférieure,
• un réservoir d'entrée de pression (1.2) avec un orifice d'entrée de pression (1.2.3), un collier de transfert de pression (1.2.2), un canal d'entrée de sonde (1.2.1) au niveau de la partie centrale,
• une bride de fixation au corps de décharge avec un canal de joint torique de la bride de fixation au corps de décharge (1.3.2) et des trous de montage de la bride de fixation au corps de décharge (1.3.1) sur celui-ci au niveau de la partie supérieure,
et le corps de décharge de pression (2) comprend ;
• une bride de fixation au corps d'entrée de pression (2.1) avec des trous de montage de la bride de fixation au corps d'entrée de pression (2.1.1) au niveau de la partie inférieure,
• un réservoir de tige de guidage (2.2) avec un canal de mouvement de tige de guidage (2.2.1) au niveau du centre,
• une bride de fixation à l'ensemble ressort (2.3) avec des trous de montage de la bride de fixation à l'ensemble ressort (2.3.1), un regard de tige de raccordement (2.3.2) et un orifice d'entrée à la tige de guidage de bride de raccordement (2.3.3) sur celui-ci au niveau de la partie supérieure,
• un canal de décharge de pression (2.4) et une bride de montage au tuyau de décharge d'environnement extérieur (2.5) avec des trous de montage de la bride de montage au tuyau de décharge d'environnement extérieur (2.5.1) sur celle-ci sur le côté.

3. Soupape de sécurité à course complète selon la revendication 1, **caractérisée en ce que** le réservoir d'entrée de pression (1.2) comprend le site de contact de clapet (5.3) avec lequel la bride de clapet (4.4) entre en contact.

4. Soupape de sécurité à course complète selon la revendication 1, **caractérisée en ce que** le clapet (4) dans le réservoir d'entrée de pression (1.2) comprend un trou d'entrée de tige de clapet (4.1.2) au niveau de la partie inférieure, un cadre de clapet (4.1) avec des dents de cadre (4.1.1) au niveau de la partie supérieure dans la partie interne, la bride de clapet (4.4), une tige de clapet (4.2) à laquelle la bride de clapet (4.4) est raccordée et le ressort de tige de clapet (4.3) qui entoure la tige de clapet (4.2).

5. Soupape de sécurité à course complète selon la revendication 1, **caractérisé en ce que** l'unité de pression supplémentaire (5) comprend un réservoir de pression (5.1), une bride de fixation de réservoir (5.2) et le site de contact de clapet (5.3).

6. Soupape de sécurité à course complète selon la revendication 5, **caractérisée en ce que** ;
• le réservoir de pression (5.1) comprend un couvercle supérieur de réservoir (5.1.1) qui comprime le ressort du réservoir (5.1.2) avec un regard de tige de guidage (5.1.1.1) du couvercle supérieur de réservoir sur celui-ci, le ressort de réservoir (5.1.2), le couvercle inférieur de réservoir (5.1.3) avec un regard de tige de guidage (5.1.3.1) du couvercle inférieur de réservoir (5.1.3) sur celui-ci, le canal de décharge de pression supplémentaire (5.1.4), un trou d'entrée de la tige de réglage de pression d'unité (5.1.5) et des dents mâles se fixant à la bride de fixation de réservoir (5.1.6),
• la bride de fixation de réservoir (5.2) comprend un canal de joint torique de bride de fixation de réservoir (5.2.1) au niveau de la partie supérieure, des dents femelles de fixation au réservoir de pression (5.2.2) au niveau du centre et des dents mâles de fixation au cadre de clapet (5.2.3) au niveau de la partie inférieure, et
• le site de contact de clapet (5.3) comprend des dents mâles de site de contact de clapet (5.3.1) au niveau des bords et un regard de tige de guidage de site de contact de clapet (5.3.2) au niveau du centre.

7. Soupape de sécurité à course complète selon la revendication 6, **caractérisée en ce qu'**elle comprend une tige de réglage de pression d'unité (8) entrant dans le trou d'entrée de la tige de réglage de pression d'unité (5.1.5).

8. Soupape de sécurité à course complète selon la revendication 1, **caractérisée en ce qu'**elle comprend une bride d'assise au corps de décharge de pression (14) qui est relié à la bride de fixation à l'ensemble ressort (2.3) avec des écrous (3) et qui possède des trous de montage de la bride d'assise de corps de décharge de pression (14.1) sur elle.

9. Soupape de sécurité à course complète selon la revendication 8, **caractérisée en ce qu'**elle comprend des brides entre des tiges de raccordement (16) qui raccordent l'un à l'autre la bride d'assise au corps de décharge de pression (14) et la bride d'assise de réservoir de diaphragme (15).

10. Soupape de sécurité à course complète selon la revendication 1, **caractérisée** en qu'elle comprend une bride d'assise de tige d'essai (21) sur la bride d'assise au corps de décharge de pression (14).

11. Soupape de sécurité à course complète selon la revendication 1, **caractérisée en ce qu'**elle comprend un cylindre de réglage de pression (9) entre la bride d'assise au corps de décharge de pression (14) et la bride d'assise de réservoir de diaphragme (15), un écrou de réglage de pression (10) sur lequel un trou d'entrée de tige de réglage d'écrou (10.1) est présent, un ressort interne (11), un ressort externe (12) et un anneau de contact de commutateur (13) qui comprend un regard de tige de guidage d'anneau de contact (13.1) dans celui-ci.

12. Soupape de sécurité à course complète selon la revendication 11, **caractérisée en ce qu'**elle comprend un regard de la tige de guidage de bride d'assise (15.1), un trou de montage du réservoir de diaphragme (15.2) et un regard de la tige de raccord (15.3) sur la bride de d'assise de réservoir de diaphragme (15).

13. Soupape de sécurité à course complète selon la revendication 11, **caractérisée en ce que** le réservoir de diaphragme (17) monté à la bride d'assise de réservoir de diaphragme (15) comprend un diaphragme (17.1) entre deux couvercles de diaphragme symétriques (17.7) raccordés entre eux avec des écrous (3), une rondelle de compression de diaphragme (17.2), un capuchon de diaphragme (17.3), une tige de diaphragme (17.4), un collier d'entrée d'air/d'eau (17.5), des trous de raccordement à la bride d'assise de réservoir de diaphragme (17.6).

14. Soupape de sécurité à course complète selon la revendication 13, **caractérisée en ce qu'**elle comprend un trou (17.2.1) d'entrée de tige de diaphragme sur rondelle sur la rondelle de compression de diaphragme (17.2), un trou de montage de diaphragme (17.1.1) sur le diaphragme (17.1), une pièce centrale de diaphragme (17.1.2), un regard de tige de la pièce centrale de diaphragme (17.1.3), un trou d'entrée de tige de diaphragme sur capuchon (17.3.1) sur le capuchon de diaphragme (17.3).

15. Soupape de sécurité à course complète selon la revendication 1, **caractérisée en ce qu'**une boîte de commande de sécurité (18) est raccordée au tuyau de transfert de pression (20) et comprend un bouton de remise à zéro (18.1), un bouton de commande de commutateur (18.2), un câble de boîte de commande (18.3), la sonde (18.4) et un trou de montage à la tige de raccordement de la boîte de commande (18.5).

16. Soupape de sécurité à course complète selon la revendication 1, **caractérisée en ce qu'**elle comprend une tige d'essai (19) qui comprend une bride d'assise de tige d'essai (21) qui est montée et qui comprend une poignée (19.2) et une fourche (19.1).

17. Soupape de sécurité à course complète selon la revendication 1, **caractérisée en ce que** le tuyau de transfert de pression (20) est entre un collier de transfert de pression (1.2.2) et un collier d'entrée d'air/d'eau (17.5).

18. Soupape de sécurité à course complète selon la revendication 1, **caractérisée en ce que** le réservoir d'eau (22) est formé par deux couvercles d'eau symétriques (22.5) fixés l'un à l'autre par des écrous (3) et **en ce que** le couvercle d'eau supérieur (22.5) comprend un collier d'entrée de pression (22.1), un collier de sortie de pression (22.2), un collier d'entrée d'eau décroissant (22.3) et un collier de distribution d'eau (22.4) sur le couvercle d'eau inférieur (22.5).

19. Soupape de sécurité à course complète selon la revendication 1, **caractérisée en ce qu'**elle comprend un tuyau de transfert d'eau (23) et des tiges de raccordement entre les réservoirs (24) entre le réservoir de diaphragme (17) et le réservoir d'eau (22).

20. Soupape de sécurité à course complète selon la revendication 15, **caractérisée en ce que** le tableau de commande (26) est raccordé au tableau de commande de sécurité (18) et est monté au niveau d'un emplacement situé hors de la soupape de sécurité.
